(19) Europäisches Patentamt

European Patent Office

Office européen des brevets

(11) EP 3 226 497 B1

(12) **EUROPEAN PATENT SPECIFICATION**

(45) Date of publication and mention
of the grant of the patent:
**06.06.2018 Bulletin 2018/23**

(51) Int Cl.:
**H04L 25/03** (2006.01)     **H04L 25/06** (2006.01)
**H04L 1/18** (2006.01)

(21) Application number: **16162788.0**

(22) Date of filing: **30.03.2016**

(54) **INITIAL LAYER SELECTION IN SUCCESSIVE INTERFERENCE CANCELATION SYSTEMS**

ERSTE SCHICHTAUSWAHL IN SUKZESSIVEN INTERFERENZUNTERDRÜCKUNGS-ABBRUCHSYSTEMEN

SÉLECTION DE COUCHE INITIALE DANS DES SYSTÈMES D'ANNULATION D'INTERFÉRENCES SUCCESSIVES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.10.2017 Bulletin 2017/40**

(73) Proprietor: **Intel Corporation
Santa Clara, CA 95054 (US)**

(72) Inventors:
• **WHINNETT, Nicholas
Bath, Bath and North East Somerset BA1 3DG
(GB)**
• **WOOD, Steven Steve
Chippenham, Wiltshire SN14 0TL (GB)**

(74) Representative: **Viering, Jentschura & Partner
mbB
Patent- und Rechtsanwälte
Am Brauhaus 8
01099 Dresden (DE)**

(56) References cited:
• **SANG WU KIM ET AL:
"Log-likelihood-ratio-based detection ordering in
V-BLAST", IEEE TRANSACTIONS ON
COMMUNICATIONS., vol. 54, no. 2, 1 February
2006 (2006-02-01), pages 302-307, XP055306382,
PISCATAWAY, NJ. USA. ISSN: 0090-6778, DOI:
10.1109/TCOMM.2005.863731**
• **ROBERT CALDERBANK ET AL: "Coded
Modulation and Precoding for Electron-Trapping
Optical Memories", IEEE TRANSACTIONS ON
COMMUNICATIONS, IEEE SERVICE CENTER,
PISCATAWAY, NJ. USA, vol. 46, no. 8, 1 August
1998 (1998-08-01) , XP011009221, ISSN:
0090-6778**
• **ASSIMI ABDEL-NASSER ET AL: "Packet
combining for multi-layer hybrid-ARQ over
frequency-selective fading channels", 2009 17TH
EUROPEAN SIGNAL PROCESSING
CONFERENCE, IEEE, 24 August 2009
(2009-08-24), pages 671-675, XP032759228, ISBN:
978-1-61738-876-7 [retrieved on 2015-04-01]**

**Description**

**Technical Field**

Various embodiments relate generally to methods and devices for selecting initial layers in Successive Interference Cancelation (SIC).

**Background**

Wireless multiple-input multiple-output (MIMO) systems may apply multiple antennas at both the transmitter and receiver side in order to transmit multiple data layers on a shared MIMO channel. MIMO systems may rely on the spatial diversity between each of the transmit and receive antennas as well as accurate channel estimation in order to allow the receiver to recover each individual data layer.

MIMO systems may additionally employ techniques such as Successive Interference Cancellation (SIC) to process the signals received on each receive antenna in order to recover each original transmit signal. SIC systems may operate by selecting one of the data layers to decode and recover while treating the other data layers as interference. An SIC system may then subtract the contribution of the selected data layer from the original combined signals at the transmit antennas and subsequently decode the next data layer from the residue. Depending on the total number of layers, an SIC system may iterate through each of the data layers until all data layers have been extracted from the original combined signal, thus obtaining estimates for each of the original data layers. The SIC system may further refine the estimates for each data layer by re-iterating through the data layers a number of additional times using the previously obtained estimates for the other data layers.

The paper of Sang Wu Kim et al: "Log-Likelihood-Ratio-Based Detection Ordering in V-BLAST", IEEE TRANSACTIONS ON COMMUNICATIONS., vol. 54, no. 2, 1 February 2006 (2006-02-01), pages 302-307, XP055306382, PISCATAWAY, NJ, USA, ISSN: 0090-6778, DOI: 10.1109/TCOMM.2005.863731 discloses a detection ordering based on the log-likelihood ratio (LLR) in an iterative nulling and cancellation process.

**Brief Description of the Drawings**

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:

FIG. 1 shows a first arrangement for a MIMO transmission and reception system;
FIG. **2** shows a second arrangement for a MIMO transmission and reception system;
FIG. **3** shows a symbol constellation map;
FIG. **4** shows a MIMO receiver device;
FIG. **5** shows a circuit arrangement for MIMO detection;
FIG. **6** shows a first method of decoding data; and
FIG. **7** shows a second method of decoding data.

**Description**

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

The words "plural" and "multiple" in the description and the claims expressly refer to a quantity greater than one. Accordingly, any phrases explicitly invoking the aforementioned words (e.g. "a plurality of [objects]", "multiple [objects]") referring to a quantity of objects expressly refers more than one of the said objects. The terms "group (of)", "set [of]", "collection (of)", "series (of)", "sequence (of)", "grouping (of)", etc., and the like in the description and in the claims, if any, refer to a quantity equal to or greater than one, i.e. one or more. The terms "proper subset", "reduced subset", and "lesser subset" refer to a subset of a set that is not equal to the set, i.e. a subset of a set that contains less elements than the set.

It is appreciated that any vector and/or matrix notation utilized herein is exemplary in nature and is employed solely for purposes of explanation. Accordingly, it is understood that the approaches detailed in this disclosure are not limited to being implemented solely using vectors and/or matrices, and that the associated processes and computations may be equivalently performed with respect to sets, sequences, groups, etc., of data, observations, information, signals, etc. Furthermore, it is appreciated that references to a "vector" may refer to a vector of any size or orientation, e.g. including a lxl vector (e.g. a scalar), a 1xM vector (e.g. a row vector), and an Mxl vector (e.g. a column vector). Similarly, it is appreciated that references to a "matrix" may refer to matrix of any size or orientation, e.g. including a lxl matrix (e.g. a scalar), a 1xM matrix (e.g. a row vector), and an Mxl matrix (e.g. a column vector).

A "circuit" as user herein is understood as any kind of logic-implementing entity, which may include special-purpose hardware or a processor executing software. A circuit may thus be an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions which will be described below in further detail may also be understood as a "circuit". It is understood that any two (or more) of the circuits detailed herein may be realized as a single circuit with substantially equivalent functionality, and conversely that any single circuit detailed herein may be realized as two (or more) separate circuits with substantially equivalent functionality. Additionally, references to a "circuit" may refer to two or more circuits that collectively form a single circuit.

As used herein, "memory" may be understood as a non-transitory computer-readable medium in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, etc., or any combination thereof. Furthermore, it is appreciated that registers, shift registers, processor registers, data buffers, etc., are also embraced herein by the term memory. It is appreciated that a single component referred to as "memory" or "a memory" may be composed of more than one different type of memory, and thus may refer to a collective component comprising one or more types of memory. It is readily understood that any single memory component may be separated into multiple collectively equivalent memory components, and vice versa. Furthermore, while memory may be depicted as separate from one or more other components (such as in the drawings), it is understood that memory may be integrated within another component, such as on a common integrated chip.

The term "base station" used in reference to an access point of a mobile communication network may be understood as a macro base station, micro base station, Node B, evolved NodeB (eNB), Home eNodeB, Remote Radio Head (RRH), relay point, etc., and may include base stations implemented with conventional base station architectures (e.g. distributed, "all-in-one", etc.) and base stations implemented with centralized base stations architectures (e.g. Cloud Radio Access Network (Cloud-RAN) or Virtual RAN (vRAN)). As used herein, a "cell" in the context of telecommunications may be understood as a sector served by a base station. Accordingly, a cell may be a set of geographically co-located antennas that correspond to a particular sectorization of a base station. A base station may thus serve one or more cells (or sectors), where each cell is characterized by a distinct communication channel. Furthermore, the term "cell" may be utilized to refer to any of a macrocell, microcell, femtocell, picocell, etc.

For purposes of this disclosure, radio communication technologies may be classified as one of a Short Range radio communication technology, Metropolitan Area System radio communication technology, or Cellular Wide Area radio communication technology. Short Range radio communication technologies include Bluetooth, WLAN (e.g. according to any IEEE 802.11 standard), and other similar radio communication technologies. Metropolitan Area System radio communication technologies include Worldwide Interoperability for Microwave Access (WiMax) (e.g. according to an IEEE 802.16 radio communication standard, e.g. WiMax fixed or WiMax mobile) and other similar radio communication technologies. Cellular Wide Area radio communication technologies include GSM, UMTS, LTE, LTE-Advanced (LTE-A), CDMA, WCDMA, LTE-A, General Packet Radio Service (GPRS), Enhanced Data Rates for GSM Evolution (EDGE), High Speed Packet Access (HSPA), HSPA Plus (HSPA+), and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies. It is understood that exemplary scenarios detailed herein are demonstrative in nature, and accordingly may be similarly applied to various other mobile communication technologies, both existing and not yet formulated, particularly in cases where such mobile communication technologies share similar features as disclosed regarding the following examples.

The term "network" as utilized herein, e.g. in reference to a communication network such as a mobile communication network, encompasses both an access section of a network (e.g. a radio access network (RAN) section) and a core section of a network (e.g. a core network section). The term "radio idle mode" or "radio idle state" used herein in reference to a mobile terminal refers to a radio control state in which the mobile terminal is not allocated at least one dedicated communication channel of a mobile communication network. The term "radio connected mode" or "radio connected state" used in reference to a mobile terminal refers to a radio control state in which the mobile terminal is allocated at least one dedicated uplink communication channel of a mobile communication network.

Unless explicitly specified, the term "transmit" encompasses both direct (point-to-point) and indirect transmission (via one or more intermediary points). Similarly, the term "receive" encompasses both direct and indirect reception. The term "communicate" encompasses one or both of transmitting and receiving, i.e. unidirectional or bidirectional communication in one or both of the incoming and outgoing directions.

Multiple-input multiple-output (MIMO) systems may employ multiple transmit and receive antennas to transmit multiple data layers on a shared MIMO channel, i.e. a set of shared time-frequency resources. Such MIMO systems may rely on the differing spatial channels between each of the transmit and receive antennas to allow the receiver to individually recover the transmitted data layers from the signals received at the received antennas, which may each be composed of contributions from each transmit antenna that have been altered by noise and other channel effects.

In a MIMO system, each transmit antenna may transmit a separate transmit symbol using the same shared time-frequency resources (e.g. using the same subcarrier or set of subcarriers during a common symbol period). Each receive antenna may then produce a separate receive symbol, where each receive symbol contains a contribution from each transmit symbol that has been altered by the spatial channel between the corresponding receive antenna and each transmit antenna. MIMO receivers may then process the receive symbols to recover the original transmit symbols, which may include applying channel equalization based on channel estimates of each spatial channel in order to individually detect each transmit symbol from the receive symbols. In a multi-subcarrier MIMO case such as for Orthogonal Frequency Division Multiple Access (OFDMA) or Single Carrier Frequency Division Multiple Access (SC-FDMA), each MIMO transmit antenna may transmit a transmit symbol on each of a plurality of subcarriers that collectively compose the shared MIMO channel.

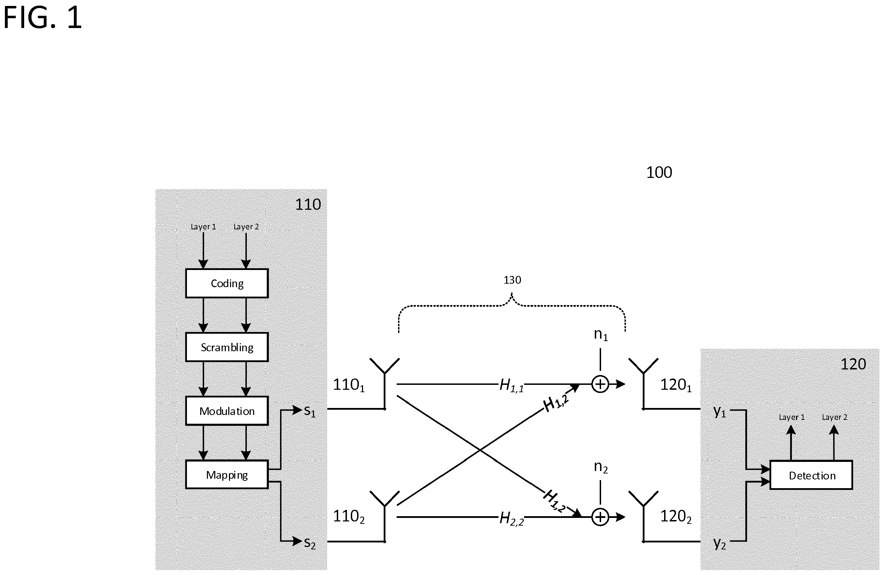

MIMO systems may employ multiple transmitters and/or multiple receivers, and accordingly may be characterized as Single-User MIMO (SU-MIMO) or Multi-User MIMO (MU-MIMO) systems. FIG. **1** shows MIMO system **100,** which may be a basic 2x2 SU-MIMO system including MIMO transmitter **110** composed of two transmit antennas **110$_1$** and **110$_2$** and MIMO receiver **120** composed of two receive antennas **120$_1$** and **120$_2$**. As MIMO channel **130** is shared between a single transmitter (**110**) and single receiver (**120**), MIMO system **100** may be classified as an SU-MIMO system.

As shown in FIG. **1,** transmitter **110** may transmit two data layers (Layer 1 and Layer 2) on MIMO channel **130** to receiver **120.** Transmitter **110** may apply channel coding, scrambling/interleaving, modulation, and antenna mapping on the original data layers to generate transmit symbols $s_1$ and $s_2$ that collectively compose transmit vector $\boldsymbol{s} = [s_1\ s_2]^T$. Transmitter **110** may then transmit each of transmit symbols $s_1$ and $s_2$ via transmit antennas **110$_1$** and **110$_2$**. Transmit symbols $s_1$ and $s_2$ may propagate through MIMO channel **130** and subsequently be received by receive antennas **120$_1$** and **120$_2$**, which may subsequently produce receive symbols $y_1$ and $y_2$ constituting receive symbol vector $\boldsymbol{y} = [y_1\ y_2]^T$. As shown in FIG. **1,** both receive symbols $y_1$ and $y_2$ may contain contributions from both transmit symbols $s_1$ and $s_2$, which may be characterized by the channel matrix **H** of MIMO channel **130** where $\mathbf{H} = [h_{1,1}\ h_{1,2};\ h_{2,1}\ h_{2,2}]$ and each $H_{i,j}$ for $i,j$ = 1,2 is a complex-valued term characterizing the wireless channel response between transmit antenna **110$_j$** and receive antenna **120$_i$**. Receiver **120** may recover the original data layers by applying MIMO detection on receive vector **y.**

Including the contribution from additive noise modeled as $\mathbf{n} = [n_1\ n_2]^T$ in MIMO channel **130,** MIMO system **100** may be modeled according to **H, s, y,** and **n** as follows:

$$\mathbf{y} = \mathbf{Hs} + \mathbf{n} \tag{1}$$

MIMO system **100** and Equation (*1*) may be analogously expanded to any $M \times N$ MIMO system with $N$ transmit antennas (and corresponding transmit symbol vector $\mathbf{s} = [s_1, ..., s_N]^T$) and $M$ receive antennas (and corresponding receive symbol vector $\mathbf{y} = [y_1, ..., y_M]^T$), where **H** denotes the $M \times N$ complex channel matrix composed of complex channel response elements $h_{i,j}$, $i$ = 1, ..., $M$, $j$ = 1, ..., $N$, **s** denotes the complex transmitted symbol vector, **n** denotes the complex additive noise, and **y** denotes the complex received noisy symbol vector.

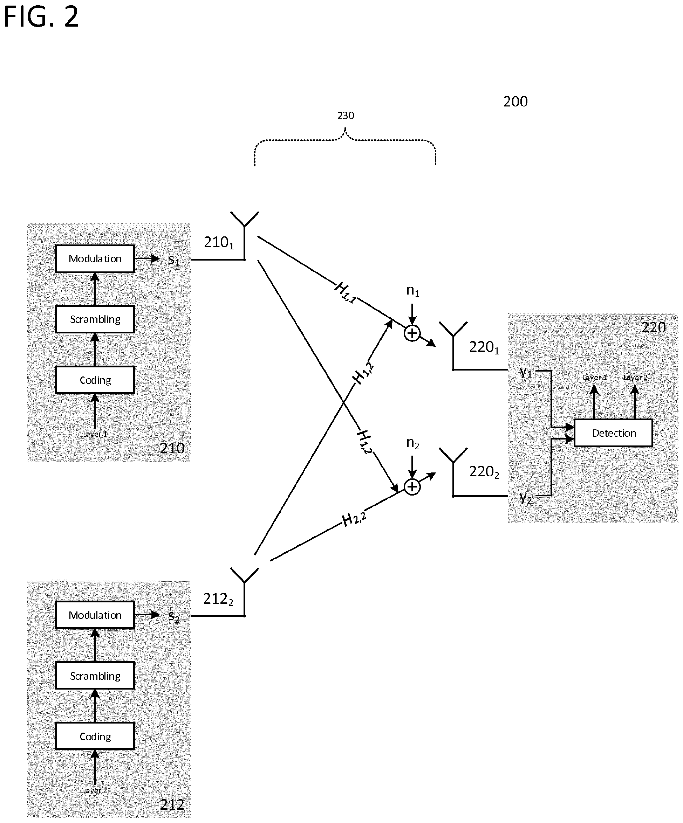

Equation (*1*) may similarly hold in a MU-MIMO system employing multiple transmitters and/or receivers. FIG. **2** depicts MIMO system **200,** which may be an MU-MIMO system including two MIMO transmitters and one MIMO receiver. As opposed to a single transmitter and single receiver each with multiple respective transmit and receive antennas, MU-MIMO system **200** may include two MIMO transmitters **210** and **212** which may each transmit a respective data layer as $s_1$ and $s_2$ over transmit antennas **210$_1$** and **212$_2$**, respectively. MIMO receiver **220** may then receive transmit symbols $s_1$ and $s_2$ as noisy receive symbols $y_1$ and $y_2$ following propagation over MIMO channel **230,** and may similarly perform MIMO detection on y using a channel matrix **H** that characterizes MIMO channel **230** to recover the original data layers. Further variations including increasing the total number $N$ and $M$ of transmit and receive antennas (where $M \geq N$), e.g. two transmit antennas at each of MIMO transmitters **210** and **212** and four receive antennas at MIMO receiver **220,** reversing the direction (e.g. with a single MIMO transmitter and multiple MIMO receivers), and/or employing both multiple transmitters and multiple receivers to share the MIMO channel are also within the scope of the present disclosure.

As shown in FIGs. **1** and **2,** MIMO transmitters may apply one or more of channel coding, scrambling/interleaving, modulation, and antenna mapping/precoding (for a MIMO transmitter with multiple transmit antennas) to the data layers prior to wireless MIMO transmission. The channel coding blocks of MIMO transmitters **110, 210,** and **212** may receive a data layer and encode the data layer using a specific coding scheme to produce an encoded digital stream that may allow for a MIMO receiver to correct transmission errors. The scrambling/interleaving blocks may then perform interleaving and/or scrambling in order to re-arrange the bits of the encoded digital stream according to a specific scrambling/interleaving scheme. The modulation blocks may then receive the encoded and scrambled/interleaved digital stream and apply symbol mapping to convert the digital stream into a stream of complex modulation symbols, where each of the modulation symbols represents one or more bits of the encoded and scrambled/ interleaved digital stream. If multiple transmit antennas are present, e.g. for MIMO transmitter **110,** the antenna mapping block may apply an antenna mapping or precoding scheme to map each complex modulation symbol across the transmit antennas.

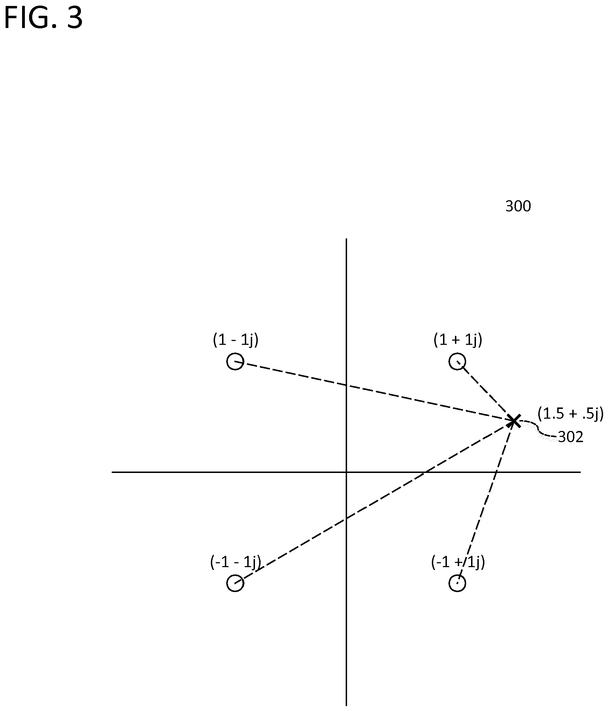

Each transmit symbol $s_j$, $j = 1, ..., N,$ of **s** and receive symbol $y_i$, $i = 1, ..., M$ may thus be a complex-valued symbol according to the particular modulation scheme employed by MIMO system **100,** where the receive symbols of **y** may be corrupted by channel effects and noise. FIG. **3** shows constellation diagram **300** illustrating constellation points $(+1 - 1j)$, $(+1 + 1j)$, $(-1 - 1j)$, and $(-1 + 1j)$ for a 4-Quadrature Amplitude Modulation (QAM) scheme, where each constellation point may be a complex number with a real and imaginary component. The set of constellation points may be denoted as constellation $\mathcal{M}$, where $\mathcal{M} = \{+1 - 1j, + 1 + 1j, -1 - 1j, -1 + 1j\}$ for the 4-QAM scheme depicted in FIG. **3.** An analogous set of constellation points $\mathcal{M}$ may similarly be given for any modulation scheme, where the particular constellation points of $\mathcal{M}$ will depend on the specific characteristics of the modulation scheme. Symbol vector **s** may thus be a vector of $N$ symbols, where each symbol corresponds to a particular constellation point of $\mathcal{M}$, i.e. $s \in \mathcal{M}^N$.

A modulation block such as depicted in MIMO transmitters **110, 210,** and **212** may receive a stream of digital input bits, partition the digital stream into blocks, and map each blocks to a constellation point to produce a corresponding complex symbol for each block. In the exemplary 4-QAM case depicted in FIG. **3,** a modulator may partition a digital stream into two-bit blocks and map each two bit block $(b_1 b_2)$ to constellation $\mathcal{M}$ as

$$
\begin{aligned}
(00) &\rightarrow (1 + 1j) \\
(01) &\rightarrow (1 - 1j) \\
(10) &\rightarrow (-1 + 1j) \\
(11) &\rightarrow (-1 - 1j)
\end{aligned}
\tag{2}
$$

The modulator may thus map the digital input stream to a stream of complex modulation symbols, where each modulation symbol represents one or more bits of the digital input stream according to the block size. Such complex modulation symbols (after precoding, if applicable) may be subsequently modulated on in-phase and quadrature (IQ) carriers according to the respective real and imaginary parts of each modulation symbol and transmitted as transmit vector **s** over the transmit antennas.

MIMO receivers such as MIMO receivers **120** and **220** may thus seek to recover the individual data layers of **s** from the noisy receive symbols of **y** obtained at receive antennas **120$_i$.** MIMO receiver **120/220** may perform such MIMO detection by applying a MIMO equalization (EQ) filter derived from the channel estimates for the individual spatial channels of **H.** Specifically, MIMO receiver **120/220** may obtain a channel estimate for each spatial channel of **H** and generate a MIMO EQ filter that MIMO receiver **120/220** may apply to receive vector **y** in order to recover an estimate $\hat{s}$ for **s**. Application of such a MIMO EQ filter may thus allow a MIMO receiver to isolate an estimate for each transmit symbol of **s** from the receive symbols of **y**, thus "detecting" the original transmit symbols and enabling MIMO receiver **120/220** to recover the original data layers.

MIMO receiver **120/220** may perform MIMO detection using any of a number of different algorithms, which may each offer varying tradeoffs between complexity and performance. Maximum Likelihood (ML) detectors may provide optimal performance with respect to error rate. ML detection may be expressed as

$$
\hat{\mathbf{s}} = \underset{\mathbf{s} \in \mathcal{M}^N}{\arg\min} \|\mathbf{y} - \mathbf{H}\mathbf{s}\|^2
\tag{3}
$$

ML detectors may thus attempt to identify a transmit vector **s** from the possible set $\mathcal{M}^N$ that minimizes the norm-squared term $\|\mathbf{y} - \mathbf{Hs}\|^2$, and apply this identified symbol vector as symbol vector estimate $\hat{s}$. However, ML detection may have complexity that is exponential to the number of antennas (as each transmit symbol may correspond to any constellation point of $\mathcal{M}$), and accordingly may be restrictive for practical implementations. Such may be prohibitively complex for modulation schemes such as SC-FDMA (e.g. in LTE uplink), which may apply a Discrete Fourier Transform (DFT) in order to spread modulated symbols over multiple subcarriers. As opposed to computing the arg min (·) for a receive symbol vector on a signal subcarrier, a receiver may instead need to compute the arg min (·) calculation over the complete vector of symbols received on all concerned subcarriers.

Linear MIMO detectors such as zero-forcing (ZF) and Minimum Mean Square Error (MMSE) detectors may offer reduced complexity compared to ML detection but may also suffer from performance degradation. For such linear detectors, MIMO receiver **120/220** may obtain a MIMO EQ filter matrix **W** any apply **W** to **y** as follows to obtain estimated transmit vector $\hat{s}$ as

$$\hat{s} = \mathbf{W}\mathbf{y} \qquad\qquad (4)$$

where **W** is a matrix characterizing a linear filter operation.

ZF and MMSE detectors may differ in the selection of the linear transformation matrix **W,** which in both cases may involve a linear manipulation of channel matrix **H.** In a ZF and an MMSE detector, **W** is given as follows

$$\mathbf{W}^{\mathrm{ZF}} = (\mathbf{H}^H\mathbf{H})^{-1}\mathbf{H}^H$$
$$\mathbf{W}^{\mathrm{MMSE}} = (\mathbf{H}^H\mathbf{H} + N\sigma^2\mathbf{I}_N)^{-1}\mathbf{H}^H$$

$$(5)$$

respectively, where **A**$^H$ denotes the Hermitian transpose of **A**, $\sigma^2$ is the noise variance, and **I**$_N$ denotes the $N \times N$ identity matrix. **W**$^{\mathbf{MMSE}}$ may be written in either inner- or outer-product form as either **W**$^{\mathbf{MMSE}}$ = (**H**$^H$**H** + $N\sigma^2$**I**$_N$)$^{-1}$**H**$^H$ (as in Equation (5)) or **W**$^{\mathbf{MMSE}}$ = **H**$^H$(**HH**$^H$ + $N\sigma^2$**I**$_N$)$^{-1}$, where inner- and outer-form depends on whether **H** is of dimension $N \times M$ or $M \times N$. MMSE detectors may also be expressed in noise whitening forms as $\mathbf{W}^{\mathrm{MMSE}} = (\mathbf{H}^H\mathbf{R}^{-1}\mathbf{H} + \sigma_{\mathrm{U}}^2\mathbf{I}_N)^{-1}\mathbf{H}^H\mathbf{R}^{-1}$ (with $\sigma_{\mathrm{U}}^2$ as the post-whitening filtered noise) and may alternatively also assume spatially non-white noise (**R** $\neq$ **I**) and express the noise component as a Hermitian matrix.

While MMSE may offer improved detection performance compared to ZF, such linear detectors may still fall short of ML detection in terms of performance. The performance gap relative to ML detection may be further reduced by using more complex non-linear algorithms, such as those conventionally based on successive interference cancellation (SIC) techniques.

SIC systems may operate by selecting and decoding an initial data layer from the received signal and subsequently "reconstructing" the selected data layer from the perspective of the receive antennas (e.g. generating the expected contribution from the selected data layer to the noise receive symbols of y). As the remaining residue may be absent of contribution from the selected data layer (excluding estimation error), the SIC system may continue to individually decode and extract each of the remaining data layers from the residue and continue as such until each data layer has been recovered. SIC systems may additionally re-iterate through the original received signal with the recovered data layers in order to refine the estimates for each data layer, thus recovering accurate estimates for each data layer as originally transmitted.

The strategy employed to select the initial layer may be of substantial importance, as the selected initial layer must be of sufficient strength to allow the receiver to decode the selected layer in the presence of the interference caused by the other transmitted data layers. Such may be particularly important when only e.g. two SIC iterations are performed (to limit complexity) due to the increased impact the selection for the initial layer will have in the detection of the remaining layers. MIMO receivers may thus need to employ an effective initial layer selection strategy in order to consistently select an initial SIC decode layer that will be successfully decoded during the first SIC decoding stage.

SIC systems may conventionally estimate the Signal-to-Noise ratio (SNR) or the Signal-to-Interference-plus-Noise ratio (SINR) of each data layer following isolation of the data layers with MIMO equalization. An SIC system may then select the data layer with the highest calculated SINR as the selected data layer for the initial SIC decoding stage. As high SINRs may indicate strong channel quality, SINR may in many cases be an effective indicator of decoding accuracy. Such may be particularly valid in cases where each data layer is encoded with the same coding rate, thus yielding relatively equivalent decoding at the MIMO receiver. However, many newer communications standards such as LTE may produce scenarios where data layers are encoded with different coding rates, such as in LTE uplink MU-MIMO schemes where multiple UEs each transmit a separate data layer to a single base station. Due to LTE link adaptation, i.e. dynamic adjustment of modulation and/or coding schemes based on radio conditions, each UE may be allocated a different coding rate and consequently produce data layers encoded with different coding rates at the MIMO receiver.

Decoding success may as a result be a function of both channel conditions (e.g. as indicated by SINR) and coding rate, thus rendering SINR as a sub-optimal criteria for initial SIC decoding layer selection. A MIMO receiver employing SIC may instead evaluate the encoded data bits received for each data layer in order to determine which data layer offers the highest expectation of decoding success during the initial SIC decoding stage. Specifically, a MIMO receiver may obtain a confidence metric based on the strength of soft probability values for each encoded data layer and select the initial SIC decoding layer based on the resulting confidence metrics. As such soft probability values indicate the confidence that the corresponding encoded bit position is a 0 or 1 prior to decoding, such evaluation may allow a MIMO receiver to gauge the expected decoding success for each data layer and subsequently select a data layer with high expected decoding accuracy as the initial SIC decode layer. Additionally, a MIMO receiver may perform the soft probability evaluation following retransmission combining, where the MIMO receiver may combine the soft bits from multiple transmissions of an encoded data layer. The resulting combined soft probability values may yield higher decoding accuracy than the uncombined soft probability values for each data layer, thus making retransmission combining a potentially important factor for the MIMO receiver to consider during initial SIC decode layer selection.

For example, in reference to MU-MIMO system **200** of FIG. **2** MIMO transmitters **210** and **212** may each be a UE employing shared MIMO channel **230** to transmit uplink transmission to MIMO receiver **220,** which may be a base station. MIMO transmitters **210** and **212** may thus both be served by base station **220,** which may be a single base station serving both MIMO transmitters **210** and **212.** MIMO transmitters **210** and **212** may be served by a single cell/sector of base station **220** or may be located in different cells/sectors of base station **220.** The scenario depicted in FIG. **2** may alternatively be modified to encompass two or more separate base stations that may each receive MIMO transmissions from MIMO transmitters **210** and **212** and subsequently provide the received MIMO transmissions to a joint processing unit that performs MIMO processing (and other base station processing) at a central location, such as e.g. a central office in a C-RAN context or in an uplink Coordinated Multipoint (CoMP) context.

Base station **220** may be configured to employ Adaptive Modulation and Coding (AMC) in order to assign modulation schemes and coding rates to UEs **210** and **212.** For example, base station **220** may be configured to evaluate the radio conditions of between each of UEs **210** and **212** and base station **220** and assign a higher-order modulation scheme and/or a higher-rate code rate to UE **210** or **212** for uplink transmissions if UE **210** or **212** has strong radio conditions, which base station **220** may observe according to SINR measurements. Conversely, base station **220** may assign lower-order modulation schemes and/or lower-rate code rates UE **210** or **212** for uplink transmissions if UE **210** or **212** has weak radio conditions. As each of UEs **210** and **212** are separate, base station **220** may individually assign each UE a Modulation and Coding Scheme (MCS). The potentially differing MCS allocations between UEs **210** and **212** may consequently result in differing transport block (TB) sizes, i.e. the amount of data from a given data layer that is transmitted by a UE in one Transmission Time Interval (TTI), e.g. 1 ms in an LTE context. UEs assigned higher code rates may thus transmit larger TBs than UEs assigned lower code rates.

Base station **220** may need to decode each data layer (Data Layer 1 and Data Layer 2) according to the potentially differing code rates employed by UEs **210** and **220,** which may lead to decoding variations not reflected by the aforementioned SINR per data layer criteria employed in conventional SIC systems. Furthermore, SINR evaluation may not reflect the retransmission status of each data layer at base station **220.** For example, many communication protocols may employ retransmission schemes such as Hybrid Automatic Repeat Request (HARQ) that combine the received data from each transmission. In an exemplary HARQ context for LTE, base station **220** may perform an error check such as a Cyclic Redundancy Check (CRC) during decoding of a given data layer to determine whether the decode was successful. If the decode was not successful, base station **220** may store the encoded input data for the decoder in a HARQ buffer and request a retransmission from the corresponding transmitting UE. Upon receiving the retransmission, base station **220** may combine the retransmitted encoded data with the encoded data from the original transmission stored in the HARQ buffer and perform the second decoding attempt with the combined data. Consequently, decoding for a given data layer may be reliably expected to have greater success if the decoding is performed with combined data over multiple transmissions, which may not be reflected by any SINR measurements. SINR measurements may similarly not reflect differing coding rates between UEs **210** and **212,** which may have a considerable effect on SIC decoding performance.

Accordingly, a MIMO receiver may instead evaluate soft probability values such as Log Likelihood Ratios (LLRs) for each encoded data layer in order to select the initial SIC decode layer. A MIMO receiver additionally may evaluate the soft probability values to reflect differences in coding rate and/or retransmission status for each data layer, thus allowing the MIMO receiver to effectively select a data layer for initial SIC decoding that will provide the highest overall decoding accuracy over all data layers.

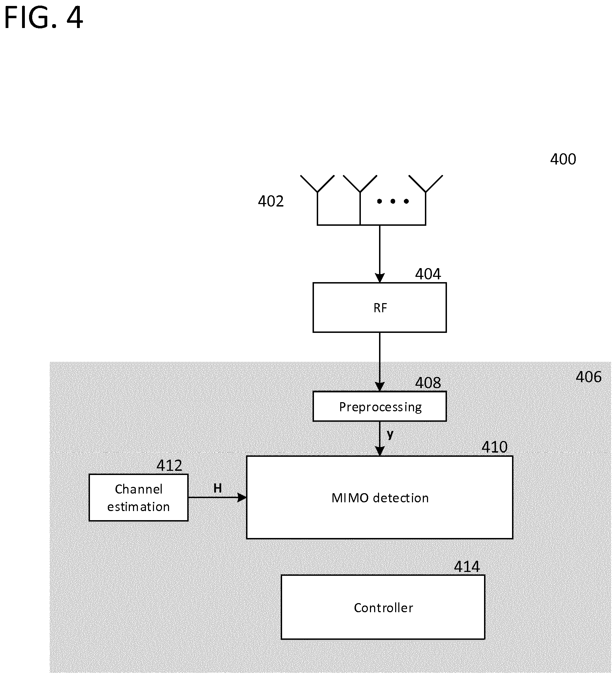

FIG. **4** shows an internal configuration of MIMO receiver **400.** As shown in FIG. **4,** MIMO receiver **400** may include antenna array **402,** radio frequency (RF) processing circuit **404,** and baseband processing circuit **406,** which may be composed of preprocessing circuit **408,** MIMO symbol detection circuit **410,** channel estimation circuit **412,** and baseband control circuit **414.** As will be detailed, MIMO receiver **400** may be configured to select the initial data layer for SIC based on soft probability values of detected MIMO symbols, which may allow MIMO receiver **400** to consider the effects of code rate/TB size in addition to retransmission status of each data layer.

MIMO receiver **400** may be realized in a wireless communication device. In a cellular communication context, MIMO receiver **400** may be implemented as either a downlink MIMO receiver or an uplink MIMO receiver. In a downlink MIMO receiver implementation, MIMO receiver **400** may be implemented at a mobile terminal and may receive downlink MIMO signals from one or more base stations over a cellular communication network, such as e.g. on a shared Orthogonal Frequency Division Multiplexing (OFDM) MIMO channel in which shared discrete subcarriers compose the MIMO channel. MIMO receiver **400** may thus be contained in a single device, e.g. a mobile phone or similar mobile terminal device. Alternatively, in an uplink MIMO receiver implementation, MIMO receiver **400** may be implemented at a base station and may receive uplink MIMO signals from one or more mobile terminals, e.g. on a shared Single Carrier Frequency Division Multiple Access (SC-FDMA) MIMO channel that similarly employs shared discrete subcarriers for the MIMO channel after uplink SC-FDMA symbols have been spread across the shared subcarriers. In such an uplink MIMO context, MIMO receiver **400** may be implemented as part of a distributed base station architecture where the individual components of MIMO receiver **400** depicted in FIG. **4** may be distributed between an antenna array (containing antenna array **402**)**,** a Remote Radio Unit (RRU; containing RF processing circuit **404** and optionally preprocessing circuit **408**)**,** and a Baseband Unit (BBU; containing baseband processing circuit **406** optionally absent preprocessing circuit **408**). MIMO receiver **400** may alternatively be implemented as part of a Cloud-RAN base station architecture in which baseband processing circuit **406** is implemented at a centralized location serving numerous the RRUs from numerous different base stations. MIMO receiver **400** as detailed herein is thus not limited to any particular uplink/downlink context or device architecture. MIMO receiver **400** may include one or more additional components such as additional hardware, software, or firmware elements including processors/microprocessors, controllers/microcontrollers, memory, other specialty or generic hardware/processors/circuits, etc., in order to support a variety of additional operations. In particular in the context of a mobile terminal device, MIMO receiver **400** may be included in a mobile terminal device that also includes a variety of user input/output devices (display(s), keypad(s), touchscreen(s), speaker(s), external button(s), camera(s), microphone(s), etc.), peripheral device(s), memory, power supply, external device interface(s), subscriber identify module(s) (SIM) etc., which may be further controlled by a central processing element such as a mobile Application Processor (AP).

Expanding on the abridged description presented above regarding MIMO receiver operation of receiver **120/220,** MIMO receiver **400** may be configured to receive wireless signals, such as according to a particular network access protocol or radio access technology (RAT) including any of LTE, WLAN/WiFi, UMTS, GSM, Bluetooth, CDMA, W-CDMA, etc. Antenna array **402** be composed of $M$ antennas in accordance with an $M \times N$ MIMO system, where each antenna may receive wireless radio frequency signals and provide resulting electrical signals to RF processing circuit **404.** RF processing circuit **404** may include various reception circuitry components, which may include analog circuitry configured to process externally received signals such as e.g. mixing circuity to convert externally received RF signals to baseband and/or intermediate frequencies. RF processing circuit **404** may also include amplification circuitry to amplify externally received signals, such as power amplifiers (PAs) and/or Low Noise Amplifiers (LNAs). RF processing circuit **404** may be a transceiver component, and accordingly may also be configured to transmit wireless signals via antenna array **402** including e.g. MIMO transmission. However, for purposes of explanation the receive chain will be of primary focus herein.

Baseband processing circuit **406** may be configured to establish and support connections with one or more network terminals (e.g. mobile terminals or base stations depending on an uplink or downlink context) by transmitting and receiving wireless signals over a particular wireless communication network according to corresponding network protocols. Baseband control circuit **414** may be configured to control the various components of baseband processing circuit **406** according to particular protocol stack of the wireless communication network, and accordingly baseband control circuit **414** may be protocol processor (e.g. microprocessor) configured to execute protocol stack software and/or firmware modules by retrieving corresponding program code from a baseband memory (not explicitly shown in FIG. **4**) and operate in accordance with control logic provided by the protocol stack software and/or firmware modules. Baseband control circuit **414** may thus be configured to execute Layer 1 (Physical or "PHY" layer), Layer 2, and Layer 3 protocol stack software and/or firmware modules and may further control other components of baseband processing circuit **406** including PHY layer hardware of MIMO detection circuit **410,** channel estimation circuit **412,** preprocessing circuit **408,** RF transceiver **404,** and antenna array **402** in accordance with the protocol stack software and/or firmware modules.

RF processing circuit **404** may provide baseband processing circuit **406** with $M$ separate analog data streams, where each $i$-th data stream corresponds to the $i$-th antenna of antenna array **402**. Baseband processing circuit **406** may first preprocess the $M$ analog data streams at preprocessing circuit **408,** which may include analog-to-digital conversion and preliminary demodulation to produce receive vector **y.** In a multi-subcarrier MIMO context, preprocessing circuit **408** may produce a receive vector **y** for each subcarrier, where each receive vector **y** contains the noisy receive symbols received on the corresponding subcarrier. For example, in an LTE context preprocessing circuit **408** may apply a Fast Fourier Transform (FFT) as part of the preliminary demodulation processing for OFDM (downlink) or SC-FDMA (uplink). As OFDM and SC-FDMA MIMO may include sharing multiple discrete subcarriers that each contain a transmit symbol, preprocessing circuit **408** may produce a separate receive vector **y** containing $M$ complex noisy received symbols for each subcarrier shared as part of the MIMO channel. Accordingly, the relationship of Equation (*1*) may be re-expressed as

$$\mathbf{y}_k = \mathbf{H}_k \mathbf{s}_k + \mathbf{n}_k, \quad k = 1, \ldots, N_{SC} \tag{6}$$

where $N_{SC}$ is the number of subcarriers of the shared MIMO channel (e.g. where $N_{SC} = 1$ in a single subcarrier case or $N_{SC} > 1$ in a multi-subcarrier case) and $\mathbf{y}_k$, $\mathbf{H}_k$, $\mathbf{s}_k$, and $\mathbf{n}_k$ respectively are the receive vector, channel matrix, transmit vector, and noise vector for the $k$-th subcarrier of the shared MIMO channel. MIMO receiver **400** may thus apply MIMO detection to the receive vector $\mathbf{y}_k$ for each subcarrier to recover an estimate $\hat{\mathbf{s}}_k$ for the original transmit symbols transmitted by the MIMO transmitters on each subcarrier. While the following description assumes the same number of data layers per MIMO subcarrier, such may be further configured to utilize different numbers of data layers per MIMO subcarrier.

MIMO detection circuit **410** may thus apply MIMO detection to the receive vector $\mathbf{y}_k$ for each subcarrier to recover an estimate $\hat{\mathbf{s}}_k$ for the original transmit symbols transmitted by the MIMO transmitters on each subcarrier, thus allowing MIMO detection circuit **410** to recover the original data layers as transmitted by the MIMO transmitters. As receive vector $\mathbf{y}_k$ includes complex symbols from a single symbol period, preprocessing circuit **408** may produce such a receive vector $\mathbf{y}_k$ for each symbol period (for each subcarrier) over an extended duration of symbol periods to reflect continuing reception of MIMO signals by antenna array **402** and RF transceiver **404.** MIMO receiver **400** may thus continuously perform decoding of each received vector $\mathbf{y}_k$ over an extended period of time as detailed below for receive vectors $\mathbf{y}_k$ in a single symbol period.

MIMO detection circuit **410** may employ SIC in order to recover the original data layers from each receive vectors $\mathbf{y}_k$, $k = 1, \ldots, N_{SC}$. As previously indicated, SIC systems may select one of the data layers to recover and decode from receive vectors $\mathbf{y}_k$ to obtain an estimate of the selected data layer. An SIC system may then reconstruct the selected data layer at the transmit symbol level and cancel the resulting reconstruction from the signals output by the receive antennas, thus leaving a signal residue that is substantially free of contribution from the selected data layer. The SIC system may then continue to decode, reconstruct, and subtract subsequent data layers from the residue to eliminate the contributions of each layer until all data layers are decoded. As previously indicated, MIMO detection circuit **410** may evaluate soft probability values for each encoded data layer to select the initial SIC decode layer, thus allowing MIMO detection circuit **410** to consider the impact of coding rate and/or retransmission state of each data layer for the selection.

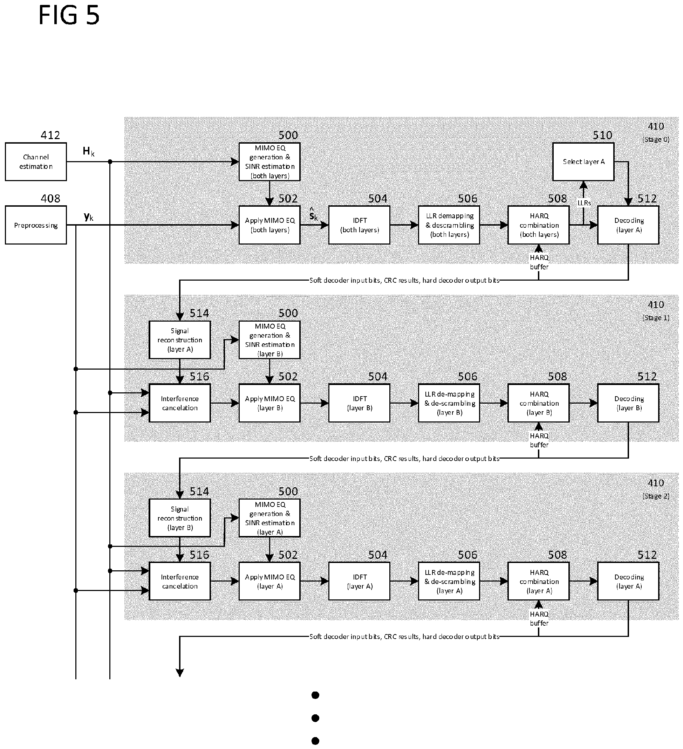

FIG. **5** shows a functional block diagram illustrating the SIC procedure as performed by MIMO detection circuit **410.** Although FIG. **5** may be described in an uplink MU-MIMO LTE case, e.g. as in the multi-user single-antenna scenario of MIMO system **200,** MIMO detection circuit **410** may analogously be applied to various other MIMO contexts without departing from the scope of the present disclosure. Similarly, while FIG. **5** depicts a two-data layer case, MIMO detection circuit **410** be analogously configured to perform SIC detection on more than two layers. FIG. **5** illustrates MIMO detection circuit **410** over several "stages" of the SIC procedure, where MIMO detection circuit **410** may decode a single layer during each SIC stage. FIG. **5** is intended to illustrate the SIC procedure executed by MIMO detection circuit **410** at a functional level and thus denotes the functional division between each of processing blocks **500-516.** Each of processing blocks **500-516** may be structurally embodied as separate or unified hardware logic, e.g. as one or more integrated circuits or FPGAs, as separate or unified software logic, e.g. as program code defining arithmetic, control, and I/O instructions stored in a non-transitory computer-readable storage medium and executed on one or more processors of MIMO detection circuit **410,** or as a combination of separate or unified hardware and software logic.

As shown in FIG. **5,** MIMO detection circuit **410** may receive input from preprocessing circuit **408** and channel estimation circuit **412.** In accordance with the LTE uplink MU-MIMO context of FIG. **5,** MIMO detection circuit **410** may receive (for each symbol period) channel matrices $\mathbf{H}_k$ and receive vectors $\mathbf{y}_k$, $k = 1, \ldots, N_{SC}$, i.e. the channel matrix and receive vector for each of the $N_{SC}$ subcarriers of the shared MIMO channel, where each receive vector $\mathbf{y}_k$ contains SC-FDMA symbols that the corresponding MIMO transmitters previously "spread" across the $N_{SC}$ subcarriers of the shared MIMO channel with a DFT prior to transmission. As previously indicated, preprocessing circuit **408** may perform ADC and apply an FFT to the $M$ analog signals provided by antenna array **402** via RF transceiver **404,** thus producing receive vectors $\mathbf{y}_k$ containing the noisy modulation symbols received at each receive antenna. The noisy modulation symbols of each $\mathbf{y}_k$ may thus contain a contribution from each transmit symbol of $\mathbf{s}_k$.

Channel estimation circuit **412** may generate channel estimates $\mathbf{H}_k$ for the subcarriers of the shared MIMO channel by evaluating reference signal symbols received via RF transceiver **404** from the MIMO transmitters. Channel estimation circuit **412** may obtain the channel estimates by evaluating phase and amplitude changes in the received reference signal symbols relative to predefined original reference signal symbols, and subsequently provide the channel estimates to MIMO EQ generation and SINR estimation block **500.** Analogous to as detailed above for the single-subcarrier case regarding estimated transmit symbol vector $\hat{s}$, MIMO EQ generation and SINR estimation block **500** may generate MIMO EQ filters $\mathbf{W}_k$ for MIMO EQ filter **502** to apply to the received noisy symbols of $\mathbf{y}_k$ supplied by

preprocessing circuit **408** in order to estimate the original transmit symbols $\mathbf{s}_k$ (as estimated transmit symbols $\hat{\mathbf{s}}_k$)overlaid on each subcarrier of the shared MIMO channel.

MIMO EQ filter **502** may thus produce an estimate $\hat{\mathbf{s}}_k$ for the original transmit symbols $\mathbf{s}_k$ of each $k$-th subcarrier of the shared MIMO channel, which may be sufficient for decoding in order to recover the original data layers embodied in the original transmit symbols. However, MIMO detection circuit **410** may obtain significantly more accurate detection results by applying SIC to sequentially decode each data layer. MIMO detection circuit **410** may thus select one of the data layers from the noisy receive symbols to decode, reconstruct the expected contribution to the noisy receive symbols associated to the decoded data layer, and cancel the expected contribution from the noisy receive symbols in order to remove initially decoded layer and subsequently select, decode, and remove a following data layer from the remaining residue.

As previously indicated, selection of the initial SIC decoding layer may have a considerable impact on the overall decoding procedure, as selection of a "weak" data layer may result in inaccurate decoding and reconstruction and subsequently impair decoding of the remaining data layers. Furthermore, factors such as coding rate/TB size and retransmission status may have an appreciable impact on decoding success. In recognition thereof, MIMO detection circuit **410** may utilize soft probabilities for each encoded data layer in order to select which data layer to decode first as the initial SIC decode layer. Specifically, MIMO detection circuit **410** may invert the modulation and channel scrambling applied to the original data layers by the respective MIMO transmitters in order to obtain soft probabilities that estimate the encoded bits of each data layer. MIMO detection circuit **410** may then evaluate the soft probabilities for each encoded data layer in order to select the initial SIC decode layer. MIMO detection circuit **410** may additionally consider the effects of retransmitted data bits for each encoded data layer in selecting the data layer for initial SIC decoding.

In accordance with the SC-FDMA modulation scheme of FIG. **5,** MIMO detection circuit **410** may apply an IDFT to the estimated transmit symbols for each subcarrier at IDFT block **504**. MIMO detection circuit **410** may thus invert the DFT applied by the corresponding MIMO transmitters to generate the SC-FDMA signals utilized for LTE uplink transmissions and consequently recover the pre-DFT complex modulation symbols for each data layer.

As detailed above regarding MIMO transmitters **210** and **212** in FIG. **2,** the corresponding MIMO transmitters may apply channel coding, scrambling, and symbol mapping as part of SC-FDMA to generate the pre-DFT modulation symbols. MIMO detection circuit **410** may thus perform symbol demapping and descrambling at LLR demapping and descrambling block **506** in order to produce soft probabilities for the encoded data bits corresponding to each data layer.

Accordingly, MIMO detection circuit **410** may perform symbol demapping in order to revert the complex modulation symbols of each layer to binary soft bit streams. As previously detailed regarding constellation diagram **300** of FIG. **3,** a MIMO transmitter may apply modulation symbol mapping to map bits of a digital input stream to complex modulation symbols according to a predefined constellation diagram. LLR demapping and descrambling block **506** may receive the resulting noisy receive symbols that have been altered from the modulation symbols of the constellation diagram by channel and noise effects. FIG. **3** shows an example for noisy modulation symbol **302** (analogous to an element of a given $\hat{\mathbf{s}}_k$) plotted against the constellation $\mathcal{M}$. As depicted in FIG. **3,** noisy modulation symbol **302** may not align with any constellation point of $\mathcal{M}$, and accordingly may be offset by some phase and amplitude from each constellation point. Such may be a result of noise effects and estimation error in approximating channel estimates $\mathbf{H}_k$, which consequently may not be absolutely corrected by MIMO equalization.

As the resulting noisy modulation symbols will likewise not probabilistically align with the original points on the constellation diagram, MIMO detection circuit **410** may demodulate the noisy modulation symbols by generating soft bits, where each soft bit indicates the probability that the original bit corresponding to a given modulation symbol was a "0" or "1". MIMO detection circuit **410** may utilize a Log Likelihood Ratio (LLR) as the soft probability for each bit, where a positive LLR indicates a likely "1", a negative LLR indicates a likely "0", and the magnitude of the LLR indicates the confidence that the corresponding polarity is correct.

Accordingly, MIMO detection circuit **410** may apply LLR demapping and descrambling block **506** in order to convert the noisy modulation symbols produced by IDFT block **504** to LLR values for the encoded data layers. Various such LLR demapping algorithms are established and may generate LLRs from noisy modulation symbols based on the distance between each noisy modulation symbol and the various constellation points as illustrated by the dashed lines in FIG. **3.** LLR demapping and descrambling block **506** may additionally invert channel scrambling and/or interleaving (as performed by a scrambling/interleaving block at a MIMO transmitter as shown in FIGs. **1** and **2)** in order to re-order the resulting LLRs to the correct bit positions of the encoded data layers.

Following LLR demapping and descrambling block **506,** MIMO detection circuit **410** may obtain LLR values for each of the encoded data layers, where each LLR represents a soft probability of a bit position of a respective encoded data layer. As previously indicated, the magnitude of each LLR may indicate the confidence in the polarity of the LLR, i.e. positive LLRs of large magnitude may indicate a high confidence that the corresponding bit of the encoded data layer is a 1 while negative LLRs of large magnitude may indicate a high confidence that the corresponding bit of the encoded data layer is a 0. Conversely, positive LLRs of small magnitude may indicate low confidence that the corresponding bit is a 1 while negative LLRs of small magnitude may indicate low confidence that the corresponding bit is a 0. Returning to exemplary constellation diagram **300** of FIG. **3,** noisy modulation symbols that fall substantially close to one of the constellation points may produce LLRs for the corresponding bits that express relatively high confidence (large magnitude LLRs) while noisy modulation symbols falling further from any of the constellation points or substantially equidistant from multipole constellation points may produce LLRs for one or more of the corresponding bits that express considerably lower confidence (low magnitude LLRs).

Accordingly, MIMO detection circuit **410** may evaluate the confidence indicated by the LLRs for each encoded data layer in order to select which data layer to perform the initial SIC decoding stage. Specifically, MIMO detection circuit **410** may equate an encoded data layers that exhibits a collective high confidence between the associated LLRs as a "strong" candidate for initial SIC decoding selection while equating an encoded data layer that exhibits a collective low confidence between the associated LLRs as "weak" candidates for initial SIC decoding.

MIMO detection circuit **410** may additionally evaluate the retransmission state of each data layer in selecting the layer for initial SIC decoding. In accordance with an LTE context, MIMO receiver **400** may implement a Hybrid Automatic Repeat Request (HARQ) retransmission scheme. In such a HARQ scheme, MIMO receiver **400** may evaluate an error check such as Cyclic Redundancy Check (CRC) for each data layer during decoding. If the error check for a data layer fails, MIMO receiver **400** may request a retransmission of the data layer from the corresponding MIMO transmitter. As opposed to discarding the encoded data layer that failed during decode, MIMO detection circuit **410** may retain the LLRs for the failed encoded data layer in a HARQ buffer. Upon receiving the subsequent retransmission of the failed data layer from the corresponding MIMO transmitter, MIMO detection circuit **410** may combine the LLRs for the failed transmission of the encoded data layer with the LLRs received for the retransmission of the encoded data layer (after performing the appropriate processing to obtain the LLRs for the retransmission of the encoded data layer). MIMO detection circuit **410** may then re-try decoding of the data layer with the combined LLRs, which may provide better decoding accuracy and improve the likelihood that the second decode attempt will be successful. MIMO detection circuit **410** may repeat this HARQ procedure to obtain a further retransmissions to combine with the initial combined LLRs for the encoded data layer if the further subsequent decode attempts fail.

As a result of the soft combining scheme offered by HARQ, data layers decoded from combined LLR values may offer greater accuracy than data layers decoded from LLR values from a single transmission. MIMO detection circuit **410** may thus additionally consider the retransmission status of each data during initial SIC selection by evaluating the LLRs for each encoded data layer after HARQ soft combining has occurred, as the process of HARQ soft combining may produce LLR values of greater collective magnitude than LLR values obtained from a single transmission of a data layer.

As shown in FIG. **5,** MIMO detection circuit **410** may apply HARQ combination block **508** to the LLRs of each encoded data layer in order to accumulate the LLR values for each encoded data layer with LLR values from a previous transmission of the respective encoded data layer stored in a HARQ buffer, if any. As retransmission for each data layer may occur separately, the HARQ buffer may contain LLR values for none, some, or all of the encoded data layers, which HARQ combination block **508** may retrieve and apply to each matching encoded data layer.

MIMO detection circuit **410** may thus output LLR values for each encoded data layer, where the output LLR values may be combined LLR values that depend on any previous transmissions of each data layer. MIMO detection circuit **410** may provide the output LLR values for each encoded data layer to layer selection block **510** and to decoding block **512.**

Layer selection block **510** may then select one of the data layers to decode in the initial SIC decoding stage (Stage 0) based on the LLR values for each encoded data layer provided by HARQ combination block **508.** Layer selection block **510** may interpret the magnitude of each LLR value as a confidence metric for the corresponding bit, and may select the data layer that produces the highest confidence metric over all encoded bit position as the initial SIC decoding layer, e.g. "Layer A". in FIG. **5.**

Layer selection block **510** may be configured to utilize any of a number of confidence metrics to quantitatively evaluate and select the initial SIC decoding layer from the data layers. For example, layer selection block **510** may calculate the mean magnitude LLR over the bit positions of each encoded data layer and select the data layer that produces to the highest mean magnitude LLR as the initial SIC decoding layer. In applying mean magnitude LLR as the confidence metric, layer selection block **510** may thus calculate the absolute value of the LLR at each bit position for a given encoded data layer and calculate the mean of these absolute values. Layer selection block **510** may calculate this mean magnitude LLR for each data encoded layer and subsequently select the data layer corresponding to the highest mean magnitude LLR as the initial SIC decoding layer. Expressed mathematically, layer selection block **510** may calculate the mean magnitude LLR $\left| LLR_l^{(avg)} \right|$ for the *l*-th data layer as

$$|LLR_l^{(avg)}| = \frac{1}{len_l} \sum_{i=0}^{len_l^{(enc)}-1} \left|LLR_l^{(i)}\right| \qquad (7)$$

where $\left|LLR_l^{(i)}\right|$ gives the absolute value of the LLR for the $i$-th bit position of the $l$-th encoded data layer, $len_l^{(enc)}$ gives the length in bits of the $l$-th encoded data layer, i.e. the total number of bit positions of the $l$-th encoded data layer, and $l$ is defined for $l = 1, ..., N_{layer}$ with $N_{layer}$ giving the total number of data layers (where $N_{layer} = N$ in the MU-MIMO case with a single layer and antenna per MIMO transmitter, e.g. $N_{layer} = 2$ in the case of FIG. **2** and FIG. **5**).

Alternatively, layer selection block **510** may calculate the mean probability of error $p_l^{(error)}$ for each encoded data layer according to the associated LLR values. Expressed mathematically, layer selection block **510** may calculate

$$p_l^{(error)} = \frac{1}{len_l^{(enc)}} \sum_{i=0}^{len_l^{(enc)}-1} \frac{1}{1 + K^{\left|LLR_l^{(i)}\right|}} \qquad (8)$$

, where $K$ is the logarithmic base of the LLR calculation (e.g. natural logarithmic base $e$), and may analogously select the $L$-th data layer associated with the encoded data layer that produces the lowest mean probability of error $p_l^{(error)}$ according to the corresponding LLR values.

While FIG. **5** depicts layer selection block **510** as occurring after HARQ combination block **508,** MIMO detection circuit **410** may alternatively not include a HARQ combination block (e.g. for communication schemes that do no support HARQ or another soft combining scheme) or may implement layer selection block **510** on the pre-HARQ LLR values for the encoded data layers, e.g. by providing the output of LLR demapping and descrambling block **506** to layer selection block **510**. However, application of layer selection block **510** after HARQ combination may allow layer selection block **510** to consider varying effective code rates of the encoded data layers in addition to the ability to evaluate post-soft combined LLR values.

As previously indicated regarding FIG. **2,** MIMO receiver **400** may be a base station receiving each data layer from MIMO transmitters **210** and **212,** respectively, which may be UEs. Each UE may have a different coding rate and TB size, thus affecting the decoding process for each encoded data layer.

UEs **210** and **212** may thus each encode the data layers with individual coding rates at the respective coding blocks. In an LTE context, UEs **210** and **212** may employ "puncturing" and "repetition" as part of a rate matching scheme in order to implement the respective coding rates. Specifically, LTE encoding blocks may utilize a "mother" rate 1/3 Turbo code, i.e. may utilize a Turbo coding scheme that produces 3 code bits for every unencoded input bit of the data layer. In order to realize coding rates higher than the 1/3 mother rate, an LTE encoding block may utilize a "puncturing" scheme in which the encoder removes certain bit positions of the encoded output, while conversely utilizing "repetition" to repeat certain bit positions of the encoded output to realize coding rates lower than 1/3. A corresponding LTE decoding block may then apply inverse rate matching by inserting LLR values of 0 in the punctured bit positions and subsequently attempt to decode the punctured encoded data layer while making use of error correction to rectify the punctured bit positions and output the original data layer.

Accordingly, MIMO detection circuit **410** may additionally apply inverse-rate matching at LLR demapping and descrambling block **506** in order to insert LLRs with value 0 at each punctured bit position to generate the LLR values for each encoded data layer. HARQ combination block **508** may thus receive the LLR values for the encoded data layers containing punctured bit positions of with LLR values of 0 and may accumulate the LLR values for each encoded data layer with LLR values of any previously received transmissions of each respective data layer. The LTE encoding block at the counterpart MIMO transmitters may additionally implement redundancy techniques such as incremental redundancy as part of the rate matching scheme, in which an LTE encoding block may puncture different bit positions for each retransmission of a given data layer. Accordingly, each retransmission may contain different punctured bit positions, thus allowing HARQ combination block **508** to "fill in" punctured bit positions of a previous transmission stored in the HARQ buffer with corresponding un-punctured bit positions in received in a subsequent transmission.

Accordingly, MIMO detection circuit **410** may consider the effects of such puncturing and redundancy when evaluating the confidence metric of each data layer at layer selection block **510**. As layer selection block **510** may calculate mean magnitude LLR and mean probability of error metrics as an average over all bit positions of the encoded data layer, one or more of the LLR values may correspond to punctured bit positions and thus hold an LLR value of 0, i.e. a probability of error of 0.5. Similarly, as MIMO detection circuit **410** may apply layer selection block **508** following HARQ soft-combining by HARQ combination block **508,** retransmitted encoded data layers may have fewer punctured bit positions and thus may produce higher mean magnitude LLR metrics and lower mean probability of error metrics.

MIMO detection circuit **410** may additionally employ a channel-capacity-to-effective-code-rate ratio as a confidence metric for initial SIC decode layer selection, where MIMO detection circuit **410** may select the data layer that produces the highest channel capacity to effective code ratio as the initial SIC decode layer. Channel capacity may be defined as the maximum data rate that can be reliably attained over a given channel, and may be directly tied to the probability of error for a given bit transmitted over the channel. For a binary symmetric channel as in the case of binary transmission and subsequent reception over a wireless channel, the channel capacity C may be expressed a function of the mean probability of error $p^{(error)}$ as

$$C = 1 + \left(1 - p^{(error)}\right) \log_2\left(1 - p^{(error)}\right) + p^{(error)} \log_2 p^{(error)} \tag{9}$$

Channel capacity may thus be inversely correlated with the mean probability of error for the channel, thus affording high channel capacity to channels with low probability of error. Layer selection block **510** may calculate the channel capacity $C_l$ for the each data layer with the mean probability of error $p_l^{(error)}$ and apply $C_l$ to calculate the channel-capacity-to-effective-code-rate ratio for use in subsequent initial SIC decode layer selection.

Layer selection block **510** may additionally calculate the effective code rate $R_l^{(eff)}$ for each data layer. Effective code rate may reflect the impact of retransmissions on the total number of encoded bits including retransmission transmitted for a given encoded data block. For example, transmitting an encoded data block with a code rate of 1/3 in addition to a subsequent retransmission of the encoded data block may yield an effective code rate of 1/6, as 6 total encoded bits were transmitted for each bit of the original data block. Layer selection block **510** may calculate the effective code rate based on the number of punctured bits, i.e. LLR values of 0, are present at the output of HARQ combination block **508.** As previously indicated, an LTE encoding block may puncture certain bit positions as part of rate matching to realize a specific code rate given a fixed mother code rate, which LLR demapping and descrambling block **506** may invert by inserting LLR values of 0 at each punctured bit position of the encoded data layers. Assuming the LTE encoding block also applies an incremental redundancy puncturing scheme, the LTE encoding block may select different bit positions to puncture for a retransmission of a given encoded data block. HARQ combination block **508** may as a result "fill in" the punctured bit positions that previously had an LLR value of 0 with non-zero LLR values provided in a retransmission of the encoded data layer during HARQ soft combining, thus reducing the number of bit positions with zero-valued LLRs at the output of HARQ combination block **508.**

Due to the application of such incremental redundancy puncturing schemes at the counterpart LTE encoding blocks, layer selection block **510** may calculate the effective code rate $R_l^{(eff)}$ directly from the number of non-zero-valued LLRs at the output of HARQ combination block **508** as

$$R_l^{(eff)} = \frac{len_l}{N_l^{(nz)}} \tag{10}$$

where $N_l^{(nz)}$ is the number of non-zero-valued LLR values for the *l*-th encoded data layer at the output of HARQ combination block **508** and $len_l$ is the length of the *l*-th data layer prior to encoding. Effective code rate may thus be inversely proportional to the number of retransmissions.

Layer selection block **510** may then calculate the channel-capacity-to-effective-code-rate ratio for each *l*-th data layer as $C_l/R_l^{(eff)}$ and subsequently apply channel-capacity-to-effective-code-rate as a confidence metric to select the data layer with the highest channel-capacity-to-effective-code-rate ratio as the initial SIC decoding layer. Accordingly, MIMO detection block **410** may select a data layer that has a high channel capacity (directly proportional to mean probability of error as expressed in Equation (*9*)) and a low effective code rate (inversely proportional to the number of retransmissions as detailed regarding Equation (*10*)).

MIMO detection circuit **410** may thus be able to apply any of mean magnitude LLR, mean probability of error, or channel-capacity-to-effective-code-rate ratio in selecting the initial SIC decode layer. As detailed above, such may allow MIMO detection circuit **410** to evaluate data layers with different coding rates/TB sizes and/or retransmission states. Accordingly, MIMO detection circuit **410** may be able to make effective selections for initial SIC decode layers and subsequently improve the overall MIMO detection accuracy for all layers.

After selecting the initial SIC decoding layer (e.g. Layer A in the two-layer scenario illustrated in FIG. **5**), MIMO detection circuit **410** may decode the initial SIC decoding layer at decoding block **512**. Decoding block **512** may thus receive the soft-combined LLR output values of encoded Layer A from HARQ combination block **508** and attempt to decode Layer A with the LLR values. Decoding block **512** may be configured to produce either hard or soft output values as the decoding results. For example, for hard output values decoding block **512** may process the received LLR values, which may include refining the LLR values according to an error correcting code used to encode Layer A at a counterpart encoding block, and output a sequence of logical 1s and 0s as the hard output corresponding to the pre-encoding version of Layer A. For soft output values, decoding block **512** may process the received LLR values and output further soft probability values, e.g. LLRs, corresponding to the pre-encoding version of Layer A. Decoding block **512** may also perform an error check such as a Cyclic Redundancy Check (CRC) in order to determine whether the resulting hard or soft output values are correct. If the error check indicates that Layer A was not decoded correctly, decoding block **512** may store the LLR values for encoded Layer A in a HARQ buffer for subsequent retrieval by HARQ combination block **508** for soft-combining. Following error check and transmission of any retransmission requests, MIMO detection circuit **410** may proceed to Stage 1 of the SIC process to reconstruct Layer A and decode Layer B. MIMO detection circuit **410** may proceed to Stage 1 regardless of whether decoded Layer A passes the error check, as MIMO detection circuit **410** may nevertheless be able to employ the soft decoder outputs for Layer A to reconstruct (according to the minimum mean squared-error) and eliminate Layer A from $\mathbf{y}_k$ and attempt to recover Layer B from the residue.

Decoding block **512** may thus provide the decoder output bits (either hard or soft output bits) for Layer A to signal reconstruction block **514**. As previously detailed, MIMO detection circuit **410** may "reconstruct" Layer A as the expected contribution of Layer A to noisy receive symbols $\mathbf{y}_k$ with signal reconstruction block **514**. Signal reconstruction block **514** may utilize a symbol superposition technique to reconstruct Layer A, and may consequently apply the soft bits for Layer A from decoding block **512** to construct the superposition of all possible symbols of Layer A weighted by the corresponding probabilities. Signal reconstruction block **514** may then re-encode Layer A (e.g. the resulting symbol superposition of Layer A), apply re-scrambling and re-mapping to produce modulation symbols for Layer A, and apply a DFT to convert the resulting modulation symbols to SC-FDMA symbols analogous to the noisy modulation symbols of each estimated transmit vector $\hat{\mathbf{s}}_k$. Signal reconstruction block **514** may then provide the reconstructed modulation symbols for Layer A to interference cancelation block **516.**

As shown in FIG. **5,** interference cancelation block **516** may additionally receive receive vectors $\mathbf{y}_k$ and channel matrices $\mathbf{H}_k$ from preprocessing circuit **408** and channel estimation circuit **412,** respectively. Interference cancelation block **516** may then apply channel matrices $\mathbf{H}_k$ to the reconstructed modulation symbols for Layer A to produce the expected contribution of Layer A to receive vectors $\mathbf{y}_k$ and proceed to cancel the expected contribution of Layer from receive vectors $\mathbf{y}_k$.

Following cancelation of the expected contribution of Layer A, MIMO decoding circuit **410** may proceed to decode Layer B from the residue. Accordingly, MIMO detection circuit **410** may generate MIMO EQ filter $\mathbf{W}_k$ at MIMO EQ generation and SINR estimation block **500,** which may consider the reduced effects of interference due to the removal of Layer A in generating the MIMO EQ filters $\mathbf{W}_k$ and thus produce different MIMO EQ filters for decoding of Layer B in SIC Stage 1. MIMO EQ filter **502** may then apply the MIMO EQ filters to the residue provided by interference cancelation block **516** and may proceed to decode Layer B at processing blocks **504-512** analogously as detailed above.

Following completion of SIC Stage 1, MIMO detection circuit **410** may thus obtain decoder output bits for Layer B, thus yielding decoded versions of both data layers. As shown for SIC Stage 2 in FIG. **5,** MIMO detection circuit **410** may proceed with one or more further SIC "iterations" in order to refine the decoded estimates for Layers A and B based on the previously obtained estimates for the other data layer.

MIMO detection circuit **410** may additionally be configured to decode more than two layers in an analogous manner. Accordingly, MIMO detection circuit **410** may apply layer selection block **510** in SIC Stage 1 to select a second SIC decode layer after Layer A has been canceled, i.e. may re-calculate confidence metrics for each of the remaining layers following application of processing blocks **502-508** in SIC Stage 2. Alternatively, MIMO detection circuit **410** may re-use the confidence metrics previously calculated in SIC Stage 0, and thus may select the second highest confidence metric as the second SIC decode layer. MIMO detection circuit **410** may continue as such until all data layers have been decoded, and additionally re-iterate through the data layers to refine the decoded estimates.

MIMO detection circuit **410** may thus select the initial SIC decode layer based on the soft probability values for each encoded data layer, thus allowing MIMO detection circuit **410** to consider the impact of coding rate and/or retransmission state on decoding accuracy. Such may allow MIMO detection circuit **410** to consistently make proper selections for the initial SIC decoding layer and improve overall MIMO detection performance for all layers.

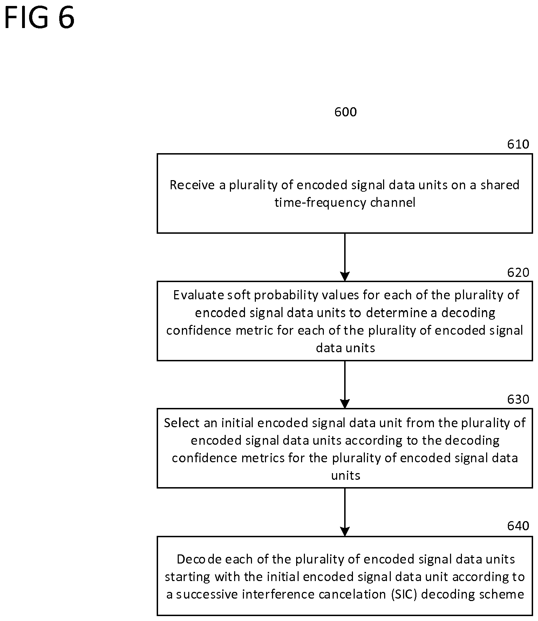

FIG. **6** shows method **600** of decoding data. As shown in FIG. **6,** method **600** may include receiving a plurality of encoded signal data units on a shared time-frequency channel (**610**), evaluating soft probability values for each of the plurality of encoded signal data units to determine a decoding confidence metric for each of the plurality of encoded signal data units (**620**), selecting an initial encoded signal data unit from the plurality of encoded signal data units according to the decoding confidence metrics for the plurality of encoded signal data units (**630**), and decoding each of the plurality of encoded signal data units starting with the initial encoded signal data unit according to a successive interference cancelation (SIC) decoding scheme (**640**).

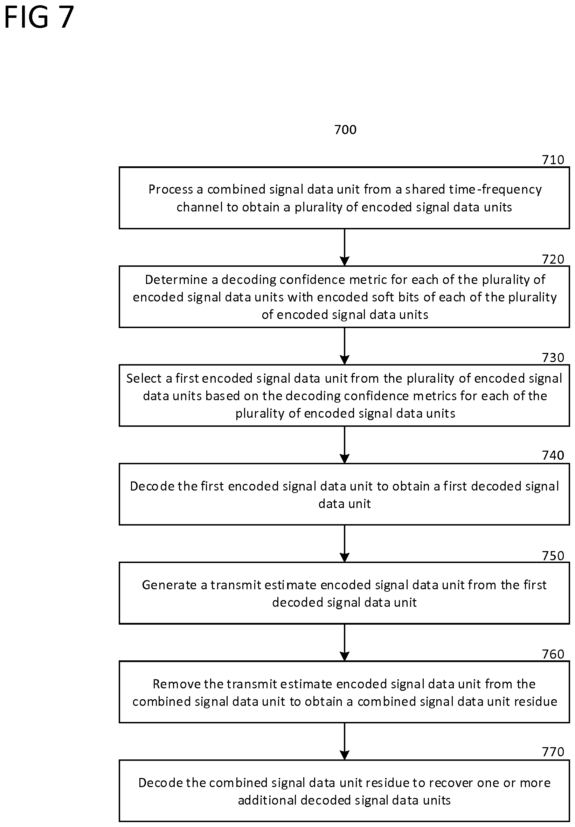

FIG. **7** shows method **700** of decoding data. As shown in FIG. **7,** method **700** may include processing a combined signal data unit from a shared time-frequency channel to obtain a plurality of encoded signal data units (**710**)**,** determining a decoding confidence metric for each of the plurality of encoded signal data units with encoded soft bits of each of the plurality of encoded signal data units (**720**), selecting a first encoded signal data unit from the plurality of encoded signal data units based on the decoding confidence metrics for each of the plurality of encoded signal data units (**730**), decoding the first encoded signal data unit to obtain a first decoded signal data unit (**740**), generating a transmit estimate encoded signal data unit from the first decoded signal data unit (**750**), removing the transmit estimate encoded signal data unit from the combined signal data unit to obtain a combined signal data unit residue (**760**), and decoding the combined signal data unit residue to recover one or more additional decoded signal data units (**770**).

In one or more further exemplary aspects of the disclosure, one or more of the features described above in reference to FIGS. **1-5** may be further incorporated into method **600** and/or **700.** In particular, method **600** and/or **700** may be configured to perform further and/or alternate processes as detailed regarding MIMO receiver **400** and/or MIMO symbol detection circuit **410.**

While the above description may detail the application of SIC for MIMO systems, such may apply to any communication scheme that contains data "collisions" at a receiver on a shared channel, e.g. MIMO, conventional interference cancelation, CDMA, etc. The above description may additionally apply to both wireless and wired channels.

The terms "user equipment", "UE", "mobile terminal", "user terminal", etc., may apply to any wireless communication device, including cellular phones, tablets, laptops, personal computers, wearables, multimedia playback and other handheld electronic devices, consumer/home/office/commercial appliances, vehicles, and any number of additional electronic devices capable of wireless communications.

While the above descriptions and connected figures may depict electronic device components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include a one or more components configured to perform each aspect of the related method.

The following examples pertain to further aspects of this disclosure:

Example 1 is a method of decoding data, the method including receiving a plurality of encoded signal data units on a shared time-frequency channel, evaluating soft probability values for each of the plurality of encoded signal data units to determine a decoding confidence metric for each of the plurality of encoded signal data units, selecting an initial encoded signal data unit from the plurality of encoded signal data units according to the decoding confidence metrics for the plurality of encoded signal data units, and decoding each of the plurality of encoded signal data units starting with the initial encoded signal data unit according to a successive interference cancelation (SIC) decoding scheme.

In Example 2, the subject matter of Example 1 can optionally include wherein receiving the plurality of encoded signal data units on the shared time-frequency channel includes receiving the plurality of encoded signal data units as a combined signal data unit on the shared time-frequency channel, the method further including isolating each of the plurality of encoded signal data units from the combined signal data unit.

In Example 3, the subject matter of Example 2 can optionally include wherein decoding each of the plurality of encoded signal data units starting with the initial encoded signal data unit according to the SIC decoding scheme includes decoding the initial encoded signal data unit to obtain an initial decoded signal data unit, processing the initial decoded signal data unit to obtain a transmit estimate initial signal data unit, removing the transmit estimate initial signal data unit from the combined signal data unit to obtain a combined signal data unit residue, and decoding the combined signal data unit residue to obtain one or more additional decoded signal data units.

In Example 4, the subject matter of Example 3 can optionally include wherein the initial decoded signal data unit and the one or more additional decoded signal data units approximate a plurality of original transmit signal data units.

In Example 5, the subject matter of any one of Examples 2 to 4 can optionally further include performing symbol demapping on the plurality of encoded signal data units to obtain the soft probability values for each of the plurality of encoded signal data units.

In Example 6, the subject matter of any one of Examples 2 to 5 can optionally include wherein the shared time-frequency channel is composed of a plurality of channels between a plurality of transmit points and a plurality of receive points, and wherein isolating each of the plurality of encoded signal data units from the combined signal data unit includes determining a channel estimate for each of the plurality of channels, and isolating each of the plurality of encoded signal data units from the combined signal data unit based on the channel estimates for each of the plurality of channels.

In Example 7, the subject matter of Example 6 can optionally include wherein the plurality of transmit points are a plurality of Multiple-Input Multiple Output (MIMO) transmit antennas and the plurality of receive points are a plurality of MIMO receive antennas.

In Example 8, the subject matter of Example 6 or 7 can optionally include wherein isolating each of the plurality of encoded signal data units from the combined signal data unit based on the channel estimates for the plurality of encoded signal data units includes generating an equalization filter based on the channel estimates for the plurality of channels, and applying the equalization filter to the combined signal data unit to isolate each of the plurality of encoded signal data units from the combined signal data unit.

In Example 9, the subject matter of any one of Examples 1 to 8 can optionally include wherein evaluating the soft probability values for each of the plurality of encoded signal data units to determine the decoding confidence metric for each of the plurality of encoded signal data units includes determining the decoding confidence metric for each of the plurality of encoded signal data units as an average probability of error for the soft probability values of each of the plurality of encoded signal data units.

In Example 10, the subject matter of Example 9 can optionally include wherein each of the soft probability values is a Log Likelihood Ratio (LLR) corresponding to a respective encoded bit position of the respective encoded signal data unit of the plurality of encoded signal data units.

In Example 11, the subject matter of Example 10 can optionally include wherein determining the decoding confidence metric for each of the plurality of encoded signal data units as the average probability of error for the soft probability values of each of the plurality of encoded signal data units includes determining a probability of error for each encoded bit position of each of the plurality of encoded signal data units based on the LLR corresponding to the encoded bit position, and determining the average probability of error for each respective encoded signal data unit of the plurality of encoded signal data units by as the average of the probability of errors of each of the encoded bit positions for the respective encoded signal data units.

In Example 12, the subject matter of any one of Examples 9 to 11 can optionally include wherein selecting the initial encoded signal data unit from the plurality of encoded signal data units according to the decoding confidence metrics for the plurality of encoded signal data units includes selecting an encoded signal data unit of the plurality of encoded signal data units having the lowest average probability of error as the initial encoded signal data unit.

In Example 13, the subject matter of any one of Examples 1 to 8 can optionally include wherein the soft probability values for each of the plurality of encoded signal data units are Log Likelihood Ratios (LLRs), and wherein evaluating the soft probability values for each of the plurality of encoded signal data units to determine the decoding confidence metric for each of the plurality of encoded signal data units includes determining the decoding confidence metric for each of the plurality of encoded signal data units as an average magnitude LLR for the LLRs of each of the plurality of encoded signal data units.

In Example 14, the subject matter of Example 13 can optionally include wherein selecting the initial encoded signal data unit from the plurality of encoded signal data units according to the decoding confidence metrics for the plurality of encoded signal data units includes selecting the encoded signal data unit of the plurality of encoded signal data units having the highest magnitude LLR as the initial encoded signal data unit.

In Example 15, the subject matter of any one of Examples 1 to 8 can optionally include wherein evaluating the soft probability values for each of the plurality of encoded signal data units to determine the decoding confidence metric for each of the plurality of encoded signal data units includes determining a channel capacity for each of the plurality of encoded signal data units based on the soft probability values for each of the plurality of encoded signal data units, determining a code rate for each of the plurality of encoded signal data units, and determining the decoding confidence metric for each of the plurality of encoded signal data units as a ratio of the channel capacity to the code rate for each of the plurality of encoded signal data units.

In Example 16, the subject matter of Example 15 can optionally include wherein each of the soft probability values is a Log Likelihood Ratio (LLR) corresponding to a respective encoded bit position of the respective encoded signal data unit of the plurality of encoded signal data units, and wherein determining the channel capacity for each of plurality of encoded signal data units based on the soft probability values for each of the plurality of encoded signal data units includes determining a probability of error value for each encoded bit position of each of the plurality of encoded signal data units based on the LLR corresponding to each encoded bit position, determining a mean probability of error for each of the plurality of encoded signal data units based on the probability of error values for each of the plurality of encoded signal data units, and determining the channel capacity for each respective encoded signal data unit of the plurality of encoded signal data units based on the mean probability of error for the respective encoded signal data unit.

In Example 17, the subject matter of Example 15 can optionally include wherein each of the soft probability values is a Log Likelihood Ratio (LLR) corresponding to a respective encoded bit position of the respective encoded signal data unit of the plurality of encoded signal data units, and wherein determining the code rate for each of the plurality of encoded signal data units includes identifying a number of nonzero-valued LLRs for each of the plurality of encoded signal data units, identifying an original unencoded signal data unit length for each of the plurality of encoded signal data units, and determining the code rate for each respective encoded signal data unit of the plurality of encoded signal data units as a ratio of the number of nonzero-valued LLRs to the original unencoded signal data unit length for the respective encoded signal data unit.

In Example 18, the subject matter of Example 15 can optionally include wherein selecting the initial encoded signal data unit from the plurality of encoded signal data units according to the decoding confidence metrics for the plurality of encoded signal data units includes selecting the encoded signal data unit of the plurality of encoded signal data units having the highest ratio of channel capacity to code rate as the initial encoded signal data unit.

In Example 19, the subject matter of any one of Examples 1 to 18 can optionally further include obtaining initial soft probability values for at least one encoded signal data unit of the plurality of encoded signal data units, identifying previous soft probability values for the least one encoded signal data unit that correspond to an earlier transmission of the at least one encoded signal data unit, and combining the initial soft probability values with the previous soft probability values to obtain the soft probability values for the at least one encoded signal data unit.

In Example 20, the subject matter of Example 19 can optionally include wherein combining the initial soft probability values with the previous soft probability values to obtain the soft probability values for the at least one encoded signal data unit includes performing Hybrid Automatic Repeat Request (HARQ) soft combination with the initial soft probability values and the previous soft probability values.

Example 21 is a signal processing circuit arrangement configured to perform the method of any one of Examples 1 to 20.

Example 22 is a non-transitory computer readable medium storing instructions that when executed by a processor direct the processor to perform the method of any one of Examples 1 to 20.

Example 23 is a network access point including circuitry configured to perform the method of any one of Examples 1 to 20.

In Example 24, the subject matter of Example 23 can optionally be configured as a base station.

Example 23 is a method of decoding data, the method including processing a combined signal data unit from a shared time-frequency channel to obtain a plurality of encoded signal data units, determining a decoding confidence metric for each of the plurality of encoded signal data units with encoded soft bits of each of the plurality of encoded signal data units, selecting a first encoded signal data unit from the plurality of encoded signal data units based on the decoding confidence metrics for each of the plurality of encoded signal data units, decoding the first encoded signal data unit to obtain a first decoded signal data unit, generating a transmit estimate encoded signal data unit from the first decoded signal data unit, removing the transmit estimate encoded signal data unit from the combined signal data unit to obtain a combined signal data unit residue, and decoding the combined signal data unit residue to recover one or more additional decoded signal data units.

In Example 26, the subject matter of Example 25 can optionally include wherein decoding the combined signal data unit residue to recover one or more additional decoded signal data units includes performing successive interference cancelation (SIC) to recover the one or more additional decoded signal data units.

In Example 27, the subject matter of Example 25 or 26 can optionally further include receiving the combined signal data unit on the shared time-frequency channel.

In Example 28, the subject matter of any one of Examples 27, wherein can optionally include the combined signal data unit from the shared time-frequency channel to obtain the plurality of encoded signal data units includes isolating each of the plurality of encoded signal data units from the combined signal data unit.

In Example 29, the subject matter of any one of Examples 25 to 27 can optionally include wherein the shared time-frequency channel is composed of a plurality of channels between a plurality of transmit points and a plurality of receive points, and wherein isolating each of the plurality of encoded signal data units from the combined signal data unit includes determining a channel estimate for each of the plurality of channels, and isolating each of the plurality of encoded signal data units from the combined signal data units based on the channel estimates for the plurality of channels.

In Example 30, the subject matter of Example 29 can optionally include wherein the plurality of transmit points are a plurality of Multiple Input Multiple Output (MIMO) transmit antennas and the plurality of receive points are a plurality of MIMO receive antennas.

In Example 31, the subject matter of Example 29 or 30 can optionally include wherein isolating each of the plurality of encoded signal data units from the combined signal data unit based on the channel estimates for the plurality of encoded signal data units includes generating an equalization filter based on the channel estimates for the plurality of channels, and applying the equalization filter to the combined signal data unit to isolate each of the plurality of encoded signal data units from the combined signal data unit.

In Example 32, the subject matter of any one of Examples 25 to 31 can optionally include wherein the first decoded signal data unit and the one or more additional decoded signal data units approximate a plurality of original transmit signal data units.

In Example 33, the subject matter of any one of Examples 25 to 32 can optionally further include performing symbol demapping on the plurality of encoded signal data units to obtain the encoded soft bits of each of the plurality of encoded signal data units.

In Example 34, the subject matter of any one of Examples 25 to 33 can optionally include wherein determining the decoding confidence metric for each of the plurality of encoded signal data units with the encoded soft bits of each of the plurality of encoded signal data units includes determining the decoding confidence metric for each of the plurality of encoded signal data units as an average probability of error for the encoded soft bits of each of the plurality of encoded signal data units.

In Example 35, the subject matter of Example 34 can optionally include wherein each of the encoded soft bits is a Log Likelihood Ratio (LLR).

In Example 36, the subject matter of Example 35 can optionally include wherein determining the decoding confidence metric for each of the plurality of encoded signal data units as the average probability of error for the encoded soft bits of each of the plurality of encoded signal data units includes determining a probability of error for each LLR of each of the plurality of encoded signal data units, and determining the average probability of error for the encoded soft bits of each of the plurality of encoded signal data units by averaging the probability of errors for each LLR of each of the plurality of encoded signal data units.

In Example 37, the subject matter of any one of Examples 34 to 36 can optionally include wherein selecting the first encoded signal data unit from the plurality of encoded signal data units based on the decoding confidence metrics for the plurality of encoded signal data units includes selecting an encoded signal data unit of the plurality of encoded signal data units having the lowest average probability of error as the first encoded signal data unit.

In Example 38, the subject matter of any one of Examples 25 to 33 can optionally include wherein the encoded soft bits of each of the plurality of encoded signal data units are Log Likelihood Ratios (LLRs), and wherein determining the decoding confidence metric for each of the plurality of encoded signal data units with the encoded soft bits of each of the plurality of encoded signal data units includes determining the decoding confidence metric for each of the plurality of encoded signal data units as an average magnitude LLR of the LLRs of each of the plurality of encoded signal data units.

In Example 39, the subject matter of Example 38 can optionally include wherein selecting the first encoded signal data unit from the plurality of encoded signal data units based on the decoding confidence metrics for each of the plurality of encoded signal data units includes selecting the encoded signal data unit of the plurality of encoded signal data units having the highest magnitude LLR as the first encoded signal data unit.

In Example 40, the subject matter of any one of Examples 25 to 33 can optionally include wherein determining the decoding confidence metric for each of the plurality of encoded signal data units with the encoded soft bits of each of the plurality of encoded signal data units includes determining a channel capacity for each of the plurality of encoded signal data units based on the encoded soft bits for each of the plurality of encoded signal data units, determining a code rate for each of the plurality of encoded signal data units, and determining the decoding confidence metric for each of the plurality of encoded signal data units as a ratio of the channel capacity to the code rate for each of the plurality of encoded signal data units.

In Example 41, the subject matter of Example 40 can optionally include wherein each of the encoded soft bits is a Log Likelihood Ratio (LLR), and wherein determining the decoding confidence metric for each of the plurality of encoded signal data units with the encoded soft bits of each of the plurality of encoded signal data units includes determining a probability of error for each LLR of each of the plurality of encoded signal data units, determining a mean probability of error for each of the plurality of encoded signal data units based on the probability of error for each of the LLRs of the plurality of encoded signal data units, and determining the channel capacity for each respective encoded signal data unit of the plurality of encoded signal data units based on the mean probability of error for the respective encoded signal data unit.

In Example 42, the subject matter of Example 40 can optionally include wherein each of the encoded soft bits is an LLR, and wherein determining the code rate for each of the plurality of encoded signal data units includes identifying a quantity of nonzero-valued LLRs for each of the plurality of encoded signal data units, identifying an original unencoded signal data unit length for each of the plurality of encoded signal data units, and determining the code rate for each respective encoded signal data unit of the plurality of encoded signal data units as a ratio of the quantity of nonzero-valued LLRs to the original unencoded signal data unit length for the respective encoded signal data unit.

In Example 43, the subject matter of any one of Examples 40 to 42 can optionally include wherein selecting the first encoded signal data unit from the plurality of encoded signal data units based on the decoding confidence metrics for each of the plurality of encoded signal data units includes selecting the encoded signal data unit of the plurality of encoded signal data units having the highest ratio of channel capacity to code rate as the first encoded signal data unit.

In Example 44, the subject matter of any one of Examples 25 to 43 can optionally further include obtaining initial encoded soft bits for at least one encoded signal data unit of the plurality of encoded signal data units, identifying previous encoded soft bits for the at least one encoded signal data unit that correspond to an earlier transmission of the at least one encoded signal data unit, and combining the initial encoded soft bits with the previous encoded soft bits to obtain the encoded soft bits for the at least one encoded signal data unit.

In Example 45, the subject matter of Example 44 can optionally include wherein combining the initial encoded soft bits with the previous encoded soft bits to obtain the encoded soft bits for the at least one encoded signal data unit includes performing Hybrid Automatic Repeat Request (HARQ) soft combination with the encoded soft bits and the previous encoded soft bits.

Example 46 is a signal processing circuit arrangement configured to perform the method of any one of Examples 25 to 45.

Example 47 is a non-transitory computer readable medium storing instructions that when executed by a processor direct the processor to perform the method of any one of Examples 25 to 45.

Example 48 is a network access point including circuitry configured to perform the method of any one of Examples 25 to 45.

In Example 49, the subject matter of Example 48 can optionally be configured as a base station.

Example 50 is a signal processing circuit arrangement including a receiver circuit configured to receive a plurality of encoded signal data units on a shared time-frequency channel, a processing circuit configured to evaluate soft probability values for each of the plurality of encoded signal data units to determine a decoding confidence metric for each of the plurality of encoded signal data units, a selection circuit configured to select an initial encoded signal data unit from the plurality of encoded signal data units according to the decoding confidence metrics for the plurality of encoded signal data units, and a layer recovery circuit configured to decode each of the plurality of encoded signal data units starting with the initial encoded signal data unit according to a successive interference cancelation (SIC) decoding scheme.

In Example 51, the subject matter of Example 50 can optionally include wherein the receiver circuit is configured to receive the plurality of encoded signal data units on the shared time-frequency channel by receiving the plurality of encoded signal data units as a combined signal data unit on the shared time-frequency channel, the signal processing circuit arrangement further including an equalization circuit configured to isolate each of the plurality of encoded signal data units from the combined signal data unit.

In Example 52, the subject matter of Example 51 can optionally include the layer recovery circuit including a decoding circuit configured to decode the initial encoded signal data unit to obtain an initial decoded signal data unit, a reconstruction circuit configured to process the initial decoded signal data unit to generate a transmit estimate initial signal data unit, a cancelation circuit configured to remove the transmit estimate initial signal data unit from the combined signal data unit to obtain a combined signal data unit reside, the decoding circuit further configured to decode the combined signal data unit residue to obtain one or more additional decoded signal data units.

In Example 55, the subject matter of Example 52 can optionally include wherein the initial decoded signal data unit and the one or more additional decoded signal data units approximate a plurality of original transmit signal data units.

In Example 54, the subject matter of any one of Examples 51 to 53 can optionally further include a symbol demapping circuit configured to perform symbol demapping on the plurality of encoded signal data units to obtain the soft probability values for each of the plurality of encoded signal data units.

In Example 55, the subject matter of any one of Examples 51 to 54 can optionally include wherein the shared time-frequency channel is composed of a plurality of channels between a plurality of transmit points and a plurality of receive points, and wherein the equalization circuit is configured to isolate each of the plurality of encoded signal data units from the combined signal data unit by determining a channel estimate for each of the plurality of channels, and isolating each of the plurality of encoded signal data units from the combined signal data unit based on the channel estimates for each of the plurality of channels.

In Example 56, the subject matter of Example 55 can optionally include wherein the plurality of transmit points are a plurality of Multiple-Input Multiple Output (MIMO) transmit antennas and the plurality of receive points are a plurality of MIMO receive antennas.

In Example 57, the subject matter of Example 55 or 56 can optionally include wherein the equalization circuit is configured to isolate each of the plurality of encoded signal data units from the combined signal data unit based on the channel estimates for the plurality of encoded signal data units by generating an equalization filter based on the channel estimates for the plurality of channels, and applying the equalization filter to the combined signal data unit to isolate each of the plurality of encoded signal data units from the combined signal data unit.

In Example 58, the subject matter of any one of Examples 50 to 57 can optionally include wherein the processing circuit is configured to evaluate the soft probability values for each of the plurality of encoded signal data units to determine the decoding confidence metric for each of the plurality of encoded signal data units by determining the decoding confidence metric for each of the plurality of encoded signal data units as an average probability of error for the soft probability values of each of the plurality of encoded signal data units.

In Example 59, the subject matter of Example 58 can optionally include wherein each of the soft probability values is a Log Likelihood Ratio (LLR) corresponding to a respective encoded bit position of the respective encoded signal data unit of the plurality of encoded signal data units.

In Example 60, the subject matter of Example 59 can optionally include wherein the processing circuit is configured to determine the decoding confidence metric for each of the plurality of encoded signal data units as the average probability of error for the soft probability values of each of the plurality of encoded signal data units by determining a probability of error for each encoded bit position of each of the plurality of encoded signal data units based on the LLR corresponding to the encoded bit position, and determining the average probability of error for each respective encoded signal data unit of the plurality of encoded signal data units by as the average of the probability of errors of each of the encoded bit positions for the respective encoded signal data units.

In Example 61, the subject matter of any one of Examples 58 to 60 can optionally include wherein the selection circuit is configured to select the initial encoded signal data unit from the plurality of encoded signal data units according to the decoding confidence metrics for the plurality of encoded signal data units by selecting an encoded signal data unit of the plurality of encoded signal data units having the lowest average probability of error as the initial encoded signal data unit.

In Example 62, the subject matter of any one of Examples 50 to 57 can optionally include wherein the soft probability values for each of the plurality of encoded signal data units are Log Likelihood Ratios (LLRs), and wherein the processing circuit is configured to evaluate the soft e probability values for each of the plurality of encoded signal data units to determine the decoding confidence metric for each of the plurality of encoded signal data units by determining the decoding confidence metric for each of the plurality of encoded signal data units as an average magnitude LLR for the LLRs of each of the plurality of encoded signal data units.

In Example 63, the subject matter of Example 62 can optionally include wherein the selection circuit is configured to select the initial encoded signal data unit from the plurality of encoded signal data units according to the decoding confidence metrics for the plurality of encoded signal data units by selecting the encoded signal data unit of the plurality of encoded signal data units having the highest magnitude LLR as the initial encoded signal data unit.

In Example 64, the subject matter of any one of Examples 50 to 57 can optionally include wherein the processing circuit is configured evaluate the soft probability values for each of the plurality of encoded signal data units to determine the decoding confidence metric for each of the plurality of encoded signal data units by determining a channel capacity for each of the plurality of encoded signal data units based on the soft probability values for each of the plurality of encoded signal data units, determining a code rate for each of the plurality of encoded signal data units, and determining the decoding confidence metric for each of the plurality of encoded signal data units as a ratio of the channel capacity to the code rate for each of the plurality of encoded signal data units.

In Example 65, the subject matter of Example 64 can optionally include wherein each of the soft probability values is a Log Likelihood Ratio (LLR) corresponding to a respective encoded bit position of the respective encoded signal data unit of the plurality of encoded signal data units, and wherein the processing circuit is configured to determine the channel capacity for each of plurality of encoded signal data units based on the soft probability values for each of the plurality of encoded signal data units by determining a probability of error value for each encoded bit position of each of the plurality of encoded signal data units based on the LLR corresponding to each encoded bit position, determining a mean probability of error for each of the plurality of encoded signal data units based on the probability of error values for each of the plurality of encoded signal data units, and determining the channel capacity for each respective encoded signal data unit of the plurality of encoded signal data units based on the mean probability of error for the respective encoded signal data unit.

In Example 66, the subject matter of Example 64 can optionally include wherein each of the soft probability values is a Log Likelihood Ratio (LLR) corresponding to a respective encoded bit position of the respective encoded signal data unit of the plurality of encoded signal data units, and wherein the processing circuit is configured to determine the code rate for each of the plurality of encoded signal data units by identifying a number of nonzero-valued LLRs for each of the plurality of encoded signal data units, identifying an original unencoded signal data unit length for each of the plurality of encoded signal data units, and determining the code rate for each respective encoded signal data unit of the plurality of encoded signal data units as a ratio of the number of nonzero-valued LLRs to the original unencoded signal data unit length for the respective encoded signal data unit.

In Example 67, the subject matter of any one of Examples 64 to 66 can optionally include wherein the selection circuit is configured select the initial encoded signal data unit from the plurality of encoded signal data units according to the decoding confidence metrics for the plurality of encoded signal data units by selecting the encoded signal data unit of the plurality of encoded signal data units having the highest ratio of channel capacity to code rate as the initial encoded signal data unit.

In Example 68, the subject matter of any one of Examples 50 to 67 can optionally further include a retransmission circuit configured to obtain initial soft probability values for at least one encoded signal data unit of the plurality of encoded signal data units, identify previous soft probability values for the at least one encoded signal data unit that correspond to an earlier transmission of the at least one encoded signal data unit, and combine the initial soft probability values with the previous soft probability values to obtain the soft probability values for the at least one encoded signal data unit.

In Example 69, the subject matter of Example 68 can optionally include wherein the retransmission circuit is configured to combine the initial soft probability values with the previous soft probability values to obtain the soft probability values for the at least one encoded signal data unit as part of a Hybrid Automatic Repeat Request (HARQ) soft combining operation.

In Example 70, the subject matter of any one of Examples 50 to 69 can optionally be configured as a base station.

In Example 71, the subject matter of any one of Examples 50 to 69 can optionally be configured as a mobile terminal device.

Example 73 is a signal processing circuit arrangement including an equalization circuit configured to process a combined signal data unit from a shared time-frequency channel to obtain a plurality of encoded signal data units, a processing circuit configured to determine a decoding confidence metric for each of the plurality of encoded signal data units with encoded soft bits of each of the plurality of encoded signal data units, a selection circuit configured to select a first encoded signal data unit from the plurality of encoded signal data units based on the decoding confidence metrics for each of the plurality of encoded signal data units, a decoding circuit configured to decode the target encoded signal data unit to obtain a decoded target signal data unit, a reconstruction circuit configured to generate a transmit estimate encoded signal data unit from the decoded target signal data unit, and a cancelation circuit configured to remove the transmit estimate encoded signal data unit from the combined signal data unit to obtain a combined signal data unit residue, the decoding circuit further configured to decode one or more encoded signal data units from the combined signal data unit residue.

In Example 73, the subject matter of Example 72 can optionally include wherein the decoding circuit is configured to decode the one or more encoded signal data units from the combined signal data unit residue by performing successive interference cancelation (SIC) to recover the one or more additional decoded signal data units.

In Example 74, the subject matter of Example 72 can optionally further include a receiver circuit configured to receive the combined signal data unit on the shared time-frequency channel.

In Example 75, the subject matter of Example 72 or 73 can optionally include wherein the equalization circuit is configured to process the combined signal data unit from the shared time-frequency channel to obtain the plurality of encoded signal data units by isolating each of the plurality of encoded signal data units from the combined signal data unit.

In Example 76, the subject matter of any one of Examples 72 to 75 can optionally include wherein the shared time-frequency channel is composed of a plurality of channels between a plurality of transmit points and a plurality of receive points, and wherein the equalization circuit is configured to isolate each of the plurality of encoded signal data units from the combined signal data unit by determining a channel estimate for each of the plurality of channels, and isolating each of the plurality of encoded signal data units from the combined signal data units based on the channel estimates for the plurality of channels.

In Example 77, the subject matter of Example 76 can optionally include wherein the plurality of transmit points are a plurality of Multiple Input Multiple Output (MIMO) transmit antennas and the plurality of receive points are a plurality of MIMO receive antennas.

In Example 78, the subject matter of Example 76 or 77 can optionally include wherein the equalization circuit is configured to isolate each of the plurality of encoded signal data units from the combined signal data unit based on the channel estimates for the plurality of encoded signal data units by generating an equalization filter based on the channel estimates for the plurality of channels, and applying the equalization filter to the combined signal data unit to isolate each of the plurality of encoded signal data units from the combined signal data unit.

In Example 79, the subject matter of any one of Examples 72 to 78 can optionally include wherein the first decoded signal data unit and the one or more additional decoded signal data units approximate a plurality of original transmit signal data units.

In Example 80, the subject matter of any one of Examples 72 to 78 can optionally further include a symbol demapping circuit configured to perform symbol demapping on the plurality of encoded signal data units to obtain the encoded soft bits of each of the plurality of encoded signal data units.

In Example 81, the subject matter of any one of Examples 72 to 80 can optionally include wherein the processing circuit is configured to determine the decoding confidence metric for each of the plurality of encoded signal data units with the encoded soft bits of each of the plurality of encoded signal data units by determining the decoding confidence metric for each of the plurality of encoded signal data units as an average probability of error for the encoded soft bits of each of the plurality of encoded signal data units.

In Example 82, the subject matter of Example 81 can optionally include wherein each of the encoded soft bits is a Log Likelihood Ratio (LLR).

In Example 83, the subject matter of Example 82 can optionally include wherein the processing circuit is configured to determine the decoding confidence metric for each of the plurality of encoded signal data units as the average probability of error for the encoded soft bits of each of the plurality of encoded signal data units by determining a probability of error for each LLR of each of the plurality of encoded signal data units, and determining the average probability of error for the encoded soft bits of each of the plurality of encoded signal data units by averaging the probability of errors for each LLR of each of the plurality of encoded signal data units.

In Example 84, the subject matter of any one of Examples 81 to 83 can optionally include wherein the selection circuit is configured to select the first encoded signal data unit from the plurality of encoded signal data units based on the decoding confidence metrics for the plurality of encoded signal data units by selecting an encoded signal data unit of the plurality of encoded signal data units having the lowest average probability of error as the first encoded signal data unit.

In Example 85, the subject matter of any one of Examples 72 to 80 can optionally include wherein the encoded soft bits of each of the plurality of encoded signal data units are Log Likelihood Ratios (LLRs), and wherein the processing circuit is configured to determine the decoding confidence metric for each of the plurality of encoded signal data units with the encoded soft bits of each of the plurality of encoded signal data units by determining the decoding confidence metric for each of the plurality of encoded signal data units as an average magnitude LLR of the LLRs of each of the plurality of encoded signal data units.

In Example 86, the subject matter of Example 85 can optionally include wherein the selection circuit is configured to select the first encoded signal data unit from the plurality of encoded signal data units based on the decoding confidence metrics for each of the plurality of encoded signal data units includes selecting the encoded signal data unit of the plurality of encoded signal data units having the highest magnitude LLR as the first encoded signal data unit.

In Example 87, the subject matter of any one of Examples 72 to 80 can optionally include wherein the processing circuit is configured to determine the decoding confidence metric for each of the plurality of encoded signal data units with the encoded soft bits of each of the plurality of encoded signal data units by determining a channel capacity for each of the plurality of encoded signal data units based on the encoded soft bits for each of the plurality of encoded signal data units, determining a code rate for each of the plurality of encoded signal data units, and determining the decoding confidence metric for each of the plurality of encoded signal data units as a ratio of the channel capacity to the code rate for each of the plurality of encoded signal data units.

In Example 88, the subject matter of Example 87 can optionally include wherein each of the encoded soft bits is a Log Likelihood Ratio (LLR), and wherein the processing circuit is configured to determine the decoding confidence metric for each of the plurality of encoded signal data units with the encoded soft bits of each of the plurality of encoded signal data units by determining a probability of error for each LLR of each of the plurality of encoded signal data units, determining a mean probability of error for each of the plurality of encoded signal data units based on the probability of error for each of the LLRs of the plurality of encoded signal data units, and determining the channel capacity for each respective encoded signal data unit of the plurality of encoded signal data units based on the mean probability of error for the respective encoded signal data unit.

In Example 89, the subject matter of Example 87 can optionally include wherein each of the encoded soft bits is an LLR, and wherein the processing circuit is configured to determine the code rate for each of the plurality of encoded signal data units by identifying a quantity of nonzero-valued LLRs for each of the plurality of encoded signal data units, identifying an original unencoded signal data unit length for each of the plurality of encoded signal data units, and determining the code rate for each respective encoded signal data unit of the plurality of encoded signal data units as a ratio of the quantity of nonzero-valued LLRs to the original unencoded signal data unit length for the respective encoded signal data unit.

In Example 90, the subject matter of any one of Examples 87 to 89 can optionally include wherein the selection circuit is configured to select the first encoded signal data unit from the plurality of encoded signal data units based on the decoding confidence metrics for each of the plurality of encoded signal data units by selecting the encoded signal data unit of the plurality of encoded signal data units having the highest ratio of channel capacity to code rate as the first encoded signal data unit.

In Example 91, the subject matter of any one of Examples 72 to 90 can optionally further include a retransmission circuit configured to obtain initial encoded soft bits for at least one encoded signal data unit of the plurality of encoded signal data units, identify previous encoded soft bits for the at least one encoded signal data unit that correspond to an earlier transmission of the at least one encoded signal data unit, and combine the initial encoded soft bits with the previous encoded soft bits to obtain the encoded soft bits for the at least one encoded signal data unit.

In Example 92, the subject matter of Example 91 can optionally include wherein the retransmission circuit is configured to combine the initial encoded soft bits with the previous encoded soft bits to obtain the encoded soft bits for the at least one encoded signal data unit as part of a Hybrid Automatic Repeat Request (HARQ) soft combining operation.

In Example 93, the subject matter of any one of Examples 72 to 92 can optionally be configured as a base station.

In Example 94, the subject matter of any one of Examples 72 to 92 can optionally be configured as a mobile terminal device.

All acronyms defined in the above description additionally hold in all claims included herein.

While the invention has been particularly shown and described with reference to specific embodiments, it should be understood by those skilled in the art that various changes in form and detail may be made therein without departing from the scope of the invention as defined by the appended claims. The scope of the invention is thus indicated by the appended claims and all changes which come within the meaning and range of equivalency of the claims are therefore intended to be embraced.

**Claims**

1.  A signal processing circuit arrangement (400) comprising:

    a receiver circuit (404) configured to receive a plurality of encoded layers on a shared time-frequency channel;
    a processing circuit (406) configured to evaluate soft probability values for each of the plurality of encoded layers to determine a decoding confidence metric for each of the plurality of encoded layers;
    a selection circuit (510) configured to select an initial encoded layer from the plurality of encoded layers according to the decoding confidence metrics for the plurality of encoded layers;
    a layer recovery circuit configured to decode each of the plurality of encoded layers starting with the initial encoded layer according to a successive interference cancelation (SIC) decoding scheme; and
    a retransmission circuit configured to:

    obtain initial soft probability values for at least one encoded layer of the plurality of encoded layers;
    identify previous soft probability values for the at least one encoded layers that correspond to an earlier transmission of the at least one encoded layers; and
    combine the initial soft probability values with the previous soft probability values to obtain the soft probability values for the at least one encoded layers.

2.  The signal processing circuit arrangement of claim 1, wherein the receiver circuit (404) is configured to receive the plurality of encoded layers on the shared time-frequency channel by:

    receiving the plurality of encoded layers as a combined signal data unit on the shared time-frequency channel,
    the signal processing circuit arrangement (400) further comprising an equalization circuit configured to isolate each of the plurality of encoded layers from the combined signal data unit.

3.  The signal processing circuit arrangement of claim 2, the layer recovery circuit comprising:

    a decoding circuit (512) configured to decode the initial encoded layer to obtain an initial decoded layer;
    a reconstruction circuit (514) configured to process the initial decoded layer to generate a transmit estimate initial layer;
    a cancelation circuit (516) configured to remove the transmit estimate initial layer from the combined signal data unit to obtain a combined signal data unit residue,
    the decoding circuit (512) further configured to decode the combined signal data unit residue to obtain one or more additional decoded layers.

4.  The signal processing circuit arrangement of any one of claims 1 to 3, wherein the processing circuit (406) is configured to evaluate the soft probability values for each of the plurality of encoded layers to determine the decoding confidence metric for each of the plurality of encoded layers by:
determining the decoding confidence metric for each of the plurality of encoded layers as an average probability of error for the soft probability values of each of the plurality of encoded layers.

5. The signal processing circuit arrangement of claim 4, wherein each of the soft probability values is a Log Likelihood Ratio (LLR) corresponding to a respective encoded bit position of the respective encoded layer of the plurality of encoded layers.

6. The signal processing circuit arrangement of claim 4 or 5, wherein the selection circuit (510) is configured to select the initial encoded layer from the plurality of encoded layers according to the decoding confidence metrics for the plurality of encoded layers by:
selecting an encoded layer of the plurality of encoded layers having the lowest average probability of error as the initial encoded layer.

7. The signal processing circuit arrangement of any one of claims 1 to 3 wherein the soft probability values for each of the plurality of encoded layers are Log Likelihood Ratios (LLRs), and wherein the processing circuit (406) is configured to evaluate the soft probability values for each of the plurality of encoded layers to determine the decoding confidence metric for each of the plurality of encoded layers by:
determining the decoding confidence metric for each of the plurality of encoded layers as an average magnitude LLR for the LLRs of each of the plurality of encoded layers.

8. The signal processing circuit arrangement of claim 7, wherein the selection circuit (510) is configured to select the initial encoded layer from the plurality of encoded layers according to the decoding confidence metrics for the plurality of encoded layers by:
selecting the encoded layer of the plurality of encoded layers having the highest magnitude LLR as the initial encoded layer.

9. The signal processing circuit arrangement of any one of claims 1 to 3, wherein the processing circuit (406) is configured to evaluate the soft probability values for each of the plurality of encoded layers to determine the decoding confidence metric for each of the plurality of encoded layers by:

determining a channel capacity for each of the plurality of encoded layers based on the soft probability values for each of the plurality of encoded layers;
determining a code rate for each of the plurality of encoded layers; and
determining the decoding confidence metric for each of the plurality of encoded layers as a ratio of the channel capacity to the code rate for each of the plurality of encoded layers.

10. The signal processing circuit arrangement of claim 9, wherein the selection circuit (510) is configured select the initial encoded layer from the plurality of encoded layers according to the decoding confidence metrics for the plurality of encoded layers by:
selecting the encoded layer of the plurality of encoded layers having the highest ratio of channel capacity to code rate as the initial encoded layer.

11. A method (600) of decoding data, the method comprising:

receiving (610) a plurality of encoded layers on a shared time-frequency channel;
evaluating (620) soft probability values for each of the plurality of encoded layers to determine a decoding confidence metric for each of the plurality of encoded layers;
selecting (630) an initial encoded layer from the plurality of encoded layers according to the decoding confidence metrics for the plurality of encoded layers;
decoding (640) each of the plurality of encoded layers starting with the initial encoded layer according to a successive interference cancelation (SIC) decoding scheme; and
obtaining initial soft probability values for at least one encoded layer of the plurality of encoded layers;
identifying previous soft probability values for the least one encoded layer that correspond to an earlier transmission of the at least one encoded layer; and
combining the initial soft probability values with the previous soft probability values to obtain the soft probability values for the at least one encoded layer.

**12.** The method of claim 11, wherein receiving (610) the plurality of encoded layers on the shared time-frequency channel comprises:

receiving the plurality of encoded layer as a combined signal data unit on the shared time-frequency channel, the method further comprising isolating each of the plurality of encoded layer from the combined signal data unit.

**13.** The method of claim 12, wherein decoding (640) each of the plurality of encoded layers starting with the initial encoded layer according to the SIC decoding scheme comprises:

decoding (740) the initial encoded layer to obtain an initial decoded layer;
processing (750) the initial decoded layer to obtain a transmit estimate initial layer;
removing (760) the transmit estimate initial layer from the combined signal data unit to obtain a combined signal data unit residue; and
decoding (770) the combined signal data unit residue to obtain one or more additional decoded layers.


**Patentansprüche**

**1.** Signalverarbeitungsschaltungsanordnung (400) aufweisend:

eine Empfängerschaltung (404), die derart eingerichtet ist, dass sie eine Mehrzahl von verschlüsselten Schichten auf einem gemeinsamen Zeit-/Frequenzkanal empfängt;
eine Verarbeitungsschaltung (406), die derart eingerichtet ist, dass sie indirekte Wahrscheinlichkeitswerte (soft probability values) für jede der Mehrzahl von verschlüsselten Schichten auswertet, um eine Entschlüsselungs-Vertrauensmetrik für jede der Mehrzahl von verschlüsselten Schichten zu ermitteln;
eine Auswahlschaltung (510), die derart eingerichtet ist, dass sie eine erste verschlüsselte Schicht aus der Mehrzahl von verschlüsselten Schichten in Übereinstimmung mit der Entschlüsselungs-Vertrauensmetrik für die Mehrzahl von verschlüsselten Schichten auswählt;
eine Schichtrückgewinnungsschaltung, die derart eingerichtet ist, dass sie beginnend mit der ersten verschlüsselten Schicht jede der Mehrzahl von verschlüsselten Schichten in Übereinstimmung mit einem sukzessiven Interferenzabbruchs-Entschlüsselungsschema (SIC) entschlüsselt; und
eine Weiterübertragungsschaltung, die derart eingerichtet ist, dass sie:

indirekte Wahrscheinlichkeitswerte für mindestens eine verschlüsselte Schicht aus der Mehrzahl von verschlüsselten Schichten erlangt;
vorherige indirekte Wahrscheinlichkeitswerte für die mindestens eine verschlüsselte Schicht ermittelt, die einer früheren Übertragung der mindestens einen verschlüsselten Schicht entsprechen; und
die ersten indirekten Wahrscheinlichkeitswerte mit den vorherigen indirekten Wahrscheinlichkeitswerten kombiniert, um die indirekten Wahrscheinlichkeitswerte für die mindestens eine verschlüsselte Schicht zu erlangen.

**2.** Signalverarbeitungsschaltungsanordnung nach Anspruch 1, wobei die Empfängerschaltung (404) derart eingerichtet ist, dass sie die Mehrzahl von verschlüsselten Schichten auf dem gemeinsamen Zeit-/Frequenzkanal empfängt, durch:

Empfangen der Mehrzahl von verschlüsselten Schichten als eine kombinierte Signaldateneinheit auf dem gemeinsamen Zeit-/Frequenzkanal,
die Signalverarbeitungsschaltungsanordnung (400) ferner aufweisend eine Ausgleichsschaltung, die derart eingerichtet ist, dass sie jede der Mehrzahl von verschlüsselten Schichten aus der kombinierten Signaldateneinheit isoliert.

**3.** Signalverarbeitungsschaltungsanordnung nach Anspruch 2, die Schichtrückgewinnungsschaltung aufweisend:

eine Entschlüsselungsschaltung (512), die derart eingerichtet ist, dass sie die erste verschlüsselte Schicht entschlüsselt, um eine erste entschlüsselte Schicht zu erlangen;
eine Wiederherstellungsschaltung (514), die derart eingerichtet ist, dass sie die erste entschlüsselte Schicht verarbeitet, um eine erste Übertragungsschätzungsschicht zu erzeugen;
eine Abbruchschaltung (516), die derart eingerichtet ist, dass sie die erste Übertragungsschätzungsschicht von der kombinierten Signaldateneinheit entfernt, um einen kombinierten Signaldateneinheitsrest zu erlangen, wobei die Entschlüsselungsschaltung (512) ferner derart eingerichtet ist, das sie den kombinierten Signaldateneinheitsrest entschlüsselt, um eine oder mehrere zusätzliche entschlüsselte Schichten zu erlangen.

4. Signalverarbeitungsschaltungsanordnung nach einem der Ansprüche 1 bis 3, wobei die Verarbeitungsschaltung (406), derart eingerichtet ist, dass sie die indirekten Wahrscheinlichkeitswerte für jede der Mehrzahl von verschlüsselten Schichten auswertet, um die Entschlüsselungs-Vertrauensmetrik für jede der Mehrzahl von verschlüsselten Schichten zu ermitteln durch:
Ermitteln der Entschlüsselungs-Vertrauensmetrik für jede der Mehrzahl von verschlüsselten Schichten als eine durchschnittliche Fehlerwahrscheinlichkeit für die indirekten Wahrscheinlichkeitswerte jeder der Mehrzahl von verschlüsselten Schichten.

5. Signalverarbeitungsschaltungsanordnung nach Anspruch 4, wobei jeder der indirekten Wahrscheinlichkeitswerte ein logarithmisches Wahrscheinlichkeitsverhältnis (Log Likelihood Ratio (LLR)) ist, das einer entsprechenden verschlüsselten Bit-Position der jeweiligen verschlüsselten Schicht der Mehrzahl von verschlüsselten Schichten entspricht.

6. Signalverarbeitungsschaltungsanordnung nach Anspruch 4 oder 5, wobei die Auswahlschaltung (510), derart eingerichtet ist, dass sie eine erste verschlüsselte Schicht aus der Mehrzahl von verschlüsselten Schichten in Übereinstimmung mit der Entschlüsselungs-Vertrauensmetrik für die Mehrzahl von verschlüsselten Schichten auswählt durch:
Auswählen einer verschlüsselten Schicht aus der Mehrzahl von verschlüsselten Schichten, welche die niedrigste durchschnittliche Fehlerwahrscheinlichkeit aufweist, als die erste verschlüsselte Schicht.

7. Signalverarbeitungsschaltungsanordnung nach einem der Ansprüche 1 bis 3, wobei die indirekten Wahrscheinlichkeitswerte für jede der Mehrzahl von verschlüsselten Schichten logarithmische Wahrscheinlichkeitsverhältnisse (LLR) sind, und wobei die Verarbeitungsschaltung (406) derart eingerichtet ist, dass sie die indirekten e Wahrscheinlichkeitswerte für jede der Mehrzahl von verschlüsselten Schichten auswertet, um die Entschlüsselungs-Vertrauensmetrik für jede der Mehrzahl von verschlüsselten Schichten zu ermitteln durch:
Ermitteln der Entschlüsselungs-Vertrauensmetrik für jede der Mehrzahl von verschlüsselten Schichten als eine LLR durchschnittlicher Größe für die LLR jeder der Mehrzahl von verschlüsselten Schichten.

8. Signalverarbeitungsschaltungsanordnung nach Anspruch 7, wobei die Auswahlschaltung (510), derart eingerichtet ist, dass sie die erste verschlüsselte Schicht aus der Mehrzahl von verschlüsselten Schichten in Übereinstimmung mit der Entschlüsselungs-Vertrauensmetrik für die Mehrzahl von verschlüsselten Schichten auswählt durch:
Auswählen der verschlüsselten Schicht aus der Mehrzahl von verschlüsselten Schichten, welche das höchste LLR aufweist, als die erste verschlüsselte Schicht.

9. Signalverarbeitungsschaltungsanordnung nach einem der Ansprüche 1 bis 3, wobei die Verarbeitungsschaltung (406), derart eingerichtet ist, dass sie die indirekten Wahrscheinlichkeitswerte für jede der Mehrzahl von verschlüsselten Schichten auswertet, um die Entschlüsselungs-Vertrauensmetrik für jede der Mehrzahl von verschlüsselten Schichten zu ermitteln durch:

Ermitteln einer Kanalkapazität für jede der Mehrzahl von verschlüsselten Schichten basierend auf den indirekten Wahrscheinlichkeitswerten für jede der Mehrzahl von verschlüsselten Schichten;
Ermitteln einer Code-Rate für jede der Mehrzahl von verschlüsselten Schichten; und
Ermitteln der Entschlüsselungs-Vertrauensmetrik für jede der Mehrzahl von verschlüsselten Schichten als ein Verhältnis der Kanalkapazität zur Code-Rate für jede der Mehrzahl von verschlüsselten Schichten.

10. Signalverarbeitungsschaltungsanordnung nach Anspruch 9, wobei die Auswahlschaltung (510), derart eingerichtet ist, dass sie die erste verschlüsselte Schicht aus der Mehrzahl von verschlüsselten Schichten in Übereinstimmung mit der Entschlüsselungs-Vertrauensmetrik für die Mehrzahl von verschlüsselten Schichten auswählt durch:
Auswählen der verschlüsselten Schicht aus der Mehrzahl von verschlüsselten Schichten, welche das höchste Verhältnis von Kanalkapazität zu Code-Rate aufweist, als die erste verschlüsselte Schicht.

11. Verfahren (600) zum Entschlüsseln von Daten, das Verfahren umfassend:

das Empfangen (610) einer Mehrzahl von verschlüsselten Schichten auf einem gemeinsamen Zeit-/Frequenzkanal;

das Auswerten (620) indirekter Wahrscheinlichkeitswerte für jede der Mehrzahl von verschlüsselten Schichten zur Ermittlung einer Entschlüsselungs-Vertrauensmetrik für jede der Mehrzahl von verschlüsselten Schichten;

das Auswählen (630) einer ersten verschlüsselten Schicht aus der Mehrzahl von verschlüsselten Schichten in Übereinstimmung mit der Entschlüsselungs-Vertrauensmetrik für die Mehrzahl von verschlüsselten Schichten;

das Entschlüsseln (640) - beginnend mit der ersten verschlüsselten Schicht - jeder der Mehrzahl von verschlüsselten Schichten in Übereinstimmung mit einem sukzessiven Interferenzabbruchs- (SIC)-Entschlüsselungsschema; und

das Erlangen erster indirekter Wahrscheinlichkeitswerte für mindestens eine verschlüsselte Schicht aus der Mehrzahl von verschlüsselten Schichten;

das Ermitteln vorheriger indirekter Wahrscheinlichkeitswerte für die mindestens eine verschlüsselte Schicht, die einer früheren Übertragung der mindestens einen verschlüsselten Schicht entsprechen; und

das Kombinieren der ersten indirekten Wahrscheinlichkeitswerte mit den vorherigen indirekten Wahrscheinlichkeitswerten zur Erlangung der indirekten Wahrscheinlichkeitswerte für die mindestens eine verschlüsselte Schicht.

12. Verfahren nach Anspruch 11, wobei das Empfangen (610) der Mehrzahl von verschlüsselten Schichten auf dem gemeinsamen Zeit-/Frequenzkanal umfasst:

das Empfangen der Mehrzahl von verschlüsselten Schichten als eine kombinierte Signaldateneinheit auf dem gemeinsamen Zeit-/Frequenzkanal,

das Verfahren ferner umfassend das Isolieren jeder der Mehrzahl von verschlüsselten Schichten aus der kombinierten Signaldateneinheit.

13. Verfahren nach Anspruch 12, wobei das Entschlüsseln (640) jeder der Mehrzahl von verschlüsselten Schichten beginnend mit der ersten verschlüsselten Schicht in Übereinstimmung mit dem SIC-Entschlüsselungsschema umfasst:

das Entschlüsseln (740) der ersten verschlüsselte Schicht zur Erlangung einer ersten entschlüsselten Schicht;

das Verarbeiten (750) der ersten entschlüsselten Schicht zur Erlangung einer ersten Übertragungsschätzungsschicht;

das Entfernen (760) der ersten Übertragungsschätzungsschicht von der kombinierten Signaldateneinheit zur Erlangung eines kombinierten Signaldateneinheitsrests; und

das Entschlüsseln (770) des kombinierten Signaldateneinheitsrests zur Erlangung einer oder mehrere zusätzlicher entschlüsselter Schichten.

**Revendications**

1. Agencement de circuit de traitement de signal (400), comprenant :

un circuit de réception (404) configuré pour recevoir une pluralité de couches encodées sur un canal de temps-fréquence partagé ;

un circuit de traitement (406) configuré pour évaluer des valeurs de probabilité souples pour chacune parmi la pluralité de couches encodées pour déterminer une mesure de confiance de décodage pour chacune parmi la pluralité de couches encodées ;

un circuit de sélection (510) configuré pour sélectionner une couche encodée initiale parmi la pluralité de couches encodées selon les mesures de confiance de décodage pour la pluralité de couches encodées ;

un circuit de récupération de couche configuré pour décoder chacune parmi la pluralité de couches encodées en commençant avec la couche encodée initiale selon une technique de décodage à annulation d'interférence successive (SIC) ; et

un circuit de retransmission configuré pour :

obtenir des valeurs de probabilité souples initiales pour au moins une couche encodée de la pluralité de couches encodées ;

identifier des valeurs de probabilité souples précédentes pour l'au moins une couche encodée qui correspondent à une transmission antérieure de l'au moins une couche encodée ; et

combiner les valeurs de probabilité souples initiales avec les valeurs de probabilité souples précédentes pour obtenir les valeurs de probabilité souples pour l'au moins une couche encodée.

2. Agencement de circuit de traitement de signal selon la revendication 1, dans lequel le circuit de réception (404) est configuré pour recevoir la pluralité de couches encodées sur le canal de temps-fréquence partagé en :

recevant la pluralité de couches encodées sous forme d'unité de données de signal combiné sur le canal de temps-fréquence partagé,
l'agencement de circuit de traitement de signal (400) comprenant en outre un circuit d'égalisation configuré pour isoler, de l'unité de données de signal combiné, chacune parmi la pluralité de couches encodées.

3. Agencement de circuit de traitement de signal selon la revendication 2, le circuit de récupération de couche comprenant :

un circuit de décodage (512) configuré pour décoder la couche encodée initiale pour obtenir une couche décodée initiale ;
un circuit de reconstruction (514) configuré pour traiter la couche décodée initiale pour générer une couche initiale d'estimation de transmission ;
un circuit d'annulation (516) configuré pour enlever, de l'unité de données de signal combiné, la couche initiale d'estimation de transmission pour obtenir un résidu d'unité de données de signal combiné,
le circuit de décodage (512) étant en outre configuré pour décoder le résidu d'unité de données de signal combiné pour obtenir une ou plusieurs couches décodées supplémentaires.

4. Agencement de circuit de traitement de signal de l'une quelconque des revendications 1 à 3, dans lequel le circuit de traitement (406) est configuré pour évaluer les valeurs de probabilité souples pour chacune parmi la pluralité de couches encodées pour déterminer la mesure de confiance de décodage pour chacune parmi la pluralité de couches encodées en :
déterminant la mesure de confiance de décodage pour chacune parmi la pluralité de couches encodées sous forme de probabilité moyenne d'erreur pour les valeurs de probabilité souples de chacune parmi la pluralité de couches encodées.

5. Agencement de circuit de traitement de signal selon la revendication 4, dans lequel chacune des valeurs de probabilité souples est un rapport de vraisemblance logarithmique (LLR) correspondant à une position de bit encodé respective de la couche encodée respective de la pluralité de couches encodées.

6. Agencement de circuit de traitement de signal selon la revendication 4 ou 5, dans lequel le circuit de sélection (510) est configuré pour sélectionner la couche encodée initiale parmi la pluralité de couches encodées selon les mesures de confiance de décodage pour la pluralité de couches encodées en :
sélectionnant une couche encodée de la pluralité de couches encodées possédant la probabilité moyenne la plus basse d'erreur en tant que couche encodée initiale.

7. Agencement de circuit de traitement de signal de l'une quelconque des revendications 1 à 3, dans lequel les valeurs de probabilité souples pour chacune parmi la pluralité de couches encodées sont des rapports de vraisemblance logarithmiques (LLRs), et dans lequel le circuit de traitement (406) est configuré pour évaluer les valeurs de probabilité e souples pour chacune parmi la pluralité de couches encodées pour déterminer la mesure de confiance de décodage pour chacune parmi la pluralité de couches encodées par :
la détermination de la mesure de confiance de décodage pour chacune parmi la pluralité de couches encodées sous forme de LLR d'amplitude moyenne pour les LLRs de chacune parmi la pluralité de couches encodées.

8. Agencement de circuit de traitement de signal selon la revendication 7, dans lequel le circuit de sélection (510) est configuré pour sélectionner la couche encodée initiale parmi la pluralité de couches encodées selon les mesures de confiance de décodage pour la pluralité de couches encodées en :
sélectionnant la couche encodée parmi la pluralité de couches encodées possédant le LLR d'amplitude la plus élevée en tant que couche encodée initiale.

9. Agencement de circuit de traitement de signal de l'une quelconque des revendications 1 à 3, dans lequel le circuit de traitement (406) est configuré pour évaluer les valeurs de probabilité souples pour chacune parmi la pluralité de couches encodées pour déterminer la mesure de confiance de décodage pour chacune parmi la pluralité de couches encodées en :

déterminant une capacité de canal pour chacune parmi la pluralité de couches encodées sur la base des valeurs de probabilité souples pour chacune parmi la pluralité de couches encodées ;

déterminant un taux de code pour chacune parmi la pluralité de couches encodées ; et

déterminant la mesure de confiance de décodage pour chacune parmi la pluralité de couches encodées sous forme de rapport de la capacité de canal par rapport au taux de code pour chacune parmi la pluralité de couches encodées.

10. Agencement de circuit de traitement de signal selon la revendication 9, dans lequel le circuit de sélection (510) est configuré pour sélectionner la couche encodée initiale parmi la pluralité de couches encodées selon la mesure de confiance de décodages pour la pluralité de couches encodées en :

sélectionnant la couche encodée de la pluralité de couches encodées possédant le rapport le plus élevé de la capacité de canal par rapport au taux de code en tant que couche encodée initiale.

11. Procédé (600) de décodage de données, le procédé comprenant :

la réception (610) d'une pluralité de couches encodées sur un canal de temps-fréquence partagé ;

l'évaluation (620) de valeurs de probabilité souples pour chacune parmi la pluralité de couches encodées pour déterminer une mesure de confiance de décodage pour chacune parmi la pluralité de couches encodées ;

la sélection (630) d'une couche encodée initiale parmi la pluralité de couches encodées selon la mesure de confiance de décodages pour la pluralité de couches encodées ;

le décodage (640) de chacune parmi la pluralité de couches encodées en commençant avec la couche encodée initiale selon une technique de décodage à annulation d'interférence successive (SIC) ; et

l'obtention de valeurs de probabilité souples initiales pour au moins une couche encodée de la pluralité de couches encodées ;

l'identification de valeurs de probabilité souples précédentes pour la au moins une couche encodée qui correspondent à une transmission antérieure de l'au moins une couche encodée ; et

la combinaison des valeurs de probabilité souples initiales avec les valeurs de probabilité souples précédentes pour obtenir les valeurs de probabilité souples pour l'au moins une couche encodée.

12. Procédé selon la revendication 11, dans lequel la réception (610) de la pluralité de couches encodées sur le canal de temps-fréquence partagé comprend :

la réception de la pluralité de couches encodées sous forme d'unité de données de signal combiné sur le canal de temps-fréquence partagé,

le procédé comprenant en outre l'isolation, de l'unité de données de signal combiné, de chacune parmi la pluralité de couches encodées.

13. Procédé selon la revendication 12, dans lequel le décodage (640) de chacune parmi la pluralité de couches encodées en commençant avec la couche encodée initiale selon la technique de décodage à SIC comprend :

le décodage (740) de la couche encodée initiale pour obtenir une couche décodée initiale ;

le traitement (750) de la couche décodée initiale pour obtenir une couche initiale d'estimation de transmission ;

l'enlèvement (760), de l'unité de données de signal combiné, de la couche initiale d'estimation de transmission pour obtenir un résidu d'unité de données de signal combiné ; et

le décodage (770) du résidu d'unité de données de signal combiné pour obtenir une ou plusieurs couches décodées supplémentaires.

FIG. 1

# FIG. 2

FIG. 3

300

(1 - 1j)

(1 + 1j)

(1.5 + .5j)

302

(-1 - 1j)

(-1 +/1j)

# FIG. 4

400

402

404

RF

406

408

Preprocessing

y

412

Channel
estimation

H

410

MIMO detection

414

Controller

# FIG 5

**412** — Channel estimation — $\mathbf{H}_k$

**500** — MIMO EQ generation & SINR estimation (both layers)

**510** — Select layer A

**410** (Stage 0)

**408** — Preprocessing — $\mathbf{y}_k$

**502** — Apply MIMO EQ (both layers) — $\hat{\mathbf{s}}_k$

**504** — IDFT (both layers)

**506** — LLR demapping & descrambling (both layers)

**508** — HARQ combination (both layers)

LLRs

**512** — Decoding (layer A)

HARQ buffer

Soft decoder input bits, CRC results, hard decoder output bits

**514** — Signal reconstruction (layer A)

**500** — MIMO EQ generation & SINR estimation (layer B)

**410** (Stage 1)

**516** — Interference cancelation

**502** — Apply MIMO EQ (layer B)

**504** — IDFT (layer B)

**506** — LLR de-mapping & de-scrambling (layer B)

**508** — HARQ combination (layer B)

**512** — Decoding (layer B)

HARQ buffer

Soft decoder input bits, CRC results, hard decoder output bits

**514** — Signal reconstruction (layer B)

**500** — MIMO EQ generation & SINR estimation (layer A)

**410** (Stage 2)

**516** — Interference cancelation

**502** — Apply MIMO EQ (layer A)

**504** — IDFT (layer A)

**506** — LLR de-mapping & de-scrambling (layer A)

**508** — HARQ combination (layer A)

**512** — Decoding (layer A)

HARQ buffer

Soft decoder input bits, CRC results, hard decoder output bits

34

# FIG 6

600

610

Receive a plurality of encoded signal data units on a shared time-frequency channel

620

Evaluate soft probability values for each of the plurality of encoded signal data units to determine a decoding confidence metric for each of the plurality of encoded signal data units

630

Select an initial encoded signal data unit from the plurality of encoded signal data units according to the decoding confidence metrics for the plurality of encoded signal data units

640

Decode each of the plurality of encoded signal data units starting with the initial encoded signal data unit according to a successive interference cancelation (SIC) decoding scheme

# FIG 7

700

710
Process a combined signal data unit from a shared time-frequency channel to obtain a plurality of encoded signal data units

720
Determine a decoding confidence metric for each of the plurality of encoded signal data units with encoded soft bits of each of the plurality of encoded signal data units

730
Select a first encoded signal data unit from the plurality of encoded signal data units based on the decoding confidence metrics for each of the plurality of encoded signal data units

740
Decode the first encoded signal data unit to obtain a first decoded signal data unit

750
Generate a transmit estimate encoded signal data unit from the first decoded signal data unit

760
Remove the transmit estimate encoded signal data unit from the combined signal data unit to obtain a combined signal data unit residue

770
Decode the combined signal data unit residue to recover one or more additional decoded signal data units

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SANG WU KIM et al.** Log-Likelihood-Ratio-Based Detection Ordering in V-BLAST. *IEEE TRANSACTIONS ON COMMUNICATIONS,* 01 February 2006, vol. 54 (2), ISSN 0090-6778, 302-307